# EUROPEAN PATENT SPECIFICATION

(11) **EP 3 029 932 B1**
(45) Date of publication and mention of the grant of the patent: **09.01.2019**
(21) Application number: 15173669.1
(22) Date of filing: 24.06.2015
(51) Int. Cl.: H04N 5/50, H04N 21/434, H04N 21/435, H04N 21/81

(54) **MULTIMEDIA DEVICE AND METHOD FOR CONTROLLING THE SAME**
MULTIMEDIAVORRICHTUNG UND ANSTEUERVERFAHREN DAFÜR
DISPOSITIF MULTIMEDIA ET SON PROCEDE DE CONTROLE

(30) Priority: 01.12.2014 KR 20140169549
(43) Date of publication of application: 08.06.2016
(73) Proprietor: LG Electronics Inc., Seoul 150-721 (KR)
(72) Inventor: LEE, Jinseok, 137-893 SEOUL (KR); LEE, Kyungho, 137-893 SEOUL (KR)
(74) Representative: Cabinet Plasseraud

(56) References cited:
- EP-A1- 1 763 246
- EP-A2- 1 898 643
- US-A- 5 371 550
- "ETSI TS 102 809 V1.2.1 Digital Video Broadcasting (DVB); Signalling and carriage of interactive applications and services in Hybrid broadcast/broadband environments", , 31 July 2013 (2013-07-31), XP055256251, Retrieved from the Internet: URL:https://ia801001.us.archive.org/12/ite ms/etsi_ts_102_809_v01.02.01/ts_102809v010 201p.pdf [retrieved on 2016-03-08]

## Description

### BACKGROUND OF THE INVENTION

### Field of the Invention

The present invention relates to a multimedia device and a method for controlling the same.

### Discussion of the Related Art

In succession to standing device, such as PC (Personal Computer), TV (Television), and so on, the evolution of mobile devices, such as smart phones, Tablet PCs, and so on, is remarkable. Although standing devices and mobile devices have initially been evolving in each of their respective fields by being differentiated from one another, such fields have become non-distinctive with the recent advent of the digital convergence boom.

Additionally, by gradually exceeding the simple function of broadcast reception, and by including additional functions, such as computer-supported functions, internet functions, and so on, TVs are evolving to forms of multimedia device being equipped with multiple and complex functions.

Meanwhile, data broadcasting refers to a broadcasting method transmitting digital broadcasting by adding supplemental data to digital broadcasting, so as to provide users with diverse functions in addition to simple broadcast programs. More specifically, data broadcasting may provide information on a corresponding broadcast program, living information, and so on, or may provide diverse supplemental information by enabling two-way communication to be established. The supplemental data for each data broadcasting having different application signaling methods, such as Application Information Table (AIT), Digital Storage Media-Command and Control (DSM-CC), and so on, for each data broadcasting standard, such as MHEG, HBBTV, MHP, OHTV, and so on.

However, in the current data broadcasting, when a user wishes to use a data broadcasting service, which is provided through a specific channel, the user is capable of verifying the presence or absence of a service and verifying the content of the corresponding service only after changing the channel to the corresponding specific channel, there lies a problem in that there are limitations in the accessing method. EP1898643 discloses methods for automatically searching for data applications within broadcast channels. EP1763246 discloses scanning a channel for AITs carried in received transport stream packets, and scanning for applications in the channel in order to find applications broadcast on the channel. Document "ETSI TS 102 809 VI.2.1 Digital Video Broadcasting (DVB); Signalling and carriage of interactive applications and services in Hybrid broadcast/broadband environments", 31 July 2013, Https://ia801001.us.archive.ore/12/items/etsi_ts_102_809)v01.02.01/ts_102809v010201p.p df discloses signalling and carriage of interactive applications and services in Hybrid broadcast/broadband environments.

### SUMMARY OF THE INVENTION

Accordingly, the present invention is directed to a multimedia device and a method for controlling the same.

An object of the present invention is to provide a multimedia device and a method for controlling the same that allows a user to verify a presence or absence of an application being serviced by a current channel and detailed content of the corresponding application even if the user does not shift (or change) channels.

Another object of the present invention is to provide a multimedia device and a method for controlling the same that allows a user to use an application independently from its respective channel in accordance with the user's selection, even if the application corresponds to an application being bound to a channel (*i.e.,* a channel-bound application).

A further object of the present invention is to provide a user interface that can diversely provide a list of applications related to data broadcasting.

The technical objects that are to be achieved in the present invention will not be limited only to the technical objects described above. Accordingly, technical objects that have not been mentioned above or additional technical objects of the present application may become apparent to those having ordinary skill in the art from the description presented below.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a multimedia device according to claim 1 is provided.

A method for controlling a multimedia device according to claim 15 is provided.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a schematic diagram illustrating a service system including a digital device according to one embodiment of the present invention;
FIG. 2 is a block diagram showing a digital device according to one embodiment of the present invention;
FIG. 3 is a block diagram showing the configuration of a digital device according to another embodiment of the present invention;
FIG. 4 is a diagram showing a digital device according to another embodiment of the present invention;
FIG. 5 is a block diagram showing the detailed configuration of each of controllers of FIGs. 2 to 4 according to one embodiment of the present invention;
FIG. 6 is a diagram showing an input unit connected to each of the digital devices of FIGs. 2 to 4 according to one embodiment of the present invention;
FIG. 7 is a diagram illustrating WebOS architecture according to one embodiment of the present invention;
FIG. 8 is a diagram illustrating architecture of a WebOS device according to one embodiment of the present invention;
FIG. 9 is a diagram illustrating a graphic composition flow in a WebOS device according to one embodiment of the present invention;
FIG. 10 is a diagram illustrating a media server according to one embodiment of the present invention;
FIG. 11 is a block diagram showing the configuration of a media server according to one embodiment of the present invention;
FIG. 12 is a diagram illustrating a relationship between a media server and a TV service according to one embodiment of the present invention;
FIG. 13 illustrates an exemplary method for using data broadcasting in a general multimedia device;
FIG. 14 illustrates a detailed block view showing a configuration module of a multimedia device according to an exemplary embodiment of the present invention;
FIG. 15 illustrates a flow chart showing an exemplary method for generating a list of applications being related to data broadcasting in a multimedia device according to an exemplary embodiment of the present invention;
FIG. 16 illustrates a syntax structure of an AIT, which may be included in signaling information of a broadcast signal;
FIG. 17 illustrates an exemplary method for providing a list of applications in a multimedia device according to an exemplary embodiment of the present invention;
FIG. 18 illustrates another exemplary method for providing a list of applications in a multimedia device according to an exemplary embodiment of the present invention;
FIG. 19 illustrates yet another exemplary method for providing a list of applications in a multimedia device according to an exemplary embodiment of the present invention;
FIG. 20 illustrates yet another exemplary method for providing a list of applications in a multimedia device according to an exemplary embodiment of the present invention;
FIG. 21 illustrates yet another exemplary method for providing a list of applications in a multimedia device according to an exemplary embodiment of the present invention;
FIG. 22 illustrates yet another exemplary method for providing a list of applications in a multimedia device according to an exemplary embodiment of the present invention;
FIG. 23 illustrates yet another exemplary method for providing a list of applications in a multimedia device according to an exemplary embodiment of the present invention;
FIG. 24 illustrates an exemplary method for executing a specific application, which is included in the list of applications, in a multimedia device according to an exemplary embodiment of the present invention;
FIG. 25 illustrates another exemplary method for executing a specific application, which is included in the list of applications, in a multimedia device according to an exemplary embodiment of the present invention;
FIG. 26 illustrates an exemplary message, which may be outputted to a display unit, in case of executing a specific application related to data broadcasting in a multimedia device according to an exemplary embodiment of the present invention;
FIG. 27 illustrates an exemplary method for editing configurations, so that the user can use a data broadcasting service independently from its respective channel in a multimedia device according to an exemplary embodiment of the present invention;
FIG. 28 illustrates a flow chart showing an exemplary method for adding an application that is being provided based upon a network in the list of applications in a multimedia device according to an exemplary embodiment of the present invention;
FIG. 29 illustrates a flow chart showing an exemplary method for updating the list of applications in a multimedia device according to an exemplary embodiment of the present invention;
FIG. 30 illustrates a flow chart showing an exemplary method for updating the list of applications in a multimedia device according to an exemplary embodiment of the present invention; and
FIG. 31 illustrates a flow chart showing an exemplary method for generating a list of application being related to data broadcasting in a multimedia device according to an exemplary embodiment of the present invention.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

In the following description, various embodiments according to the present invention are explained with reference to attached drawings.

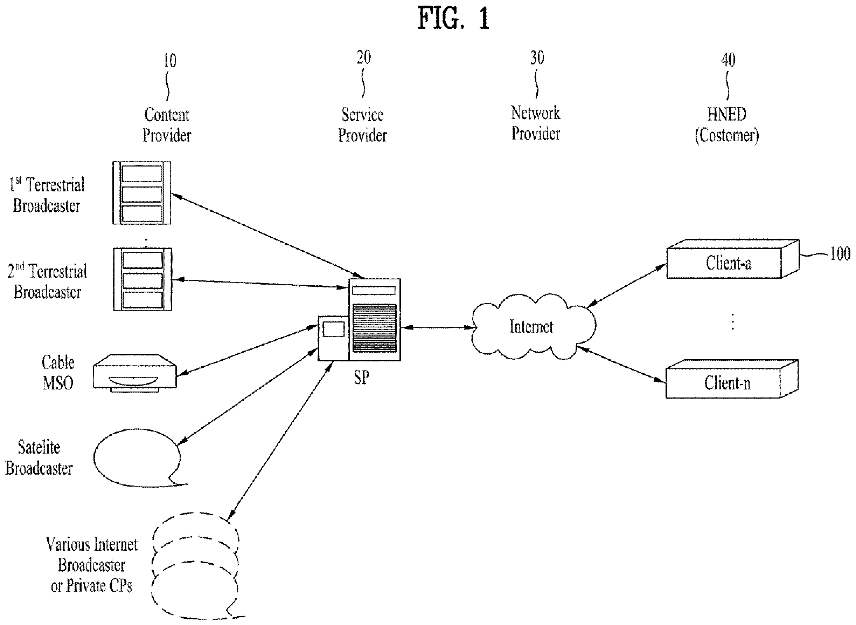

FIG. 1 illustrates a broadcast system including a digital receiver according to an embodiment of the present invention.

Referring to FIG. 1, examples of a broadcast system comprising a digital receiver may include a content provider (CP) 10, a service provider (SP) 20, a network provider (NP) 30, and a home network end user (HNED) (Customer) 40. The HNED 40 includes a client 100, that is, a digital receiver.

Each of the CP 10, SP 20 and NP 30, or a combination thereof may be referred to as a server. The HNED 40 can also function as a server. The term 'server' means an entity that transmits data to another entity in a digital broadcast environment. Considering a server-client concept, the server can be regarded as an absolute concept and a relative concept. For example, one entity can be a server in a relationship with a first entity and can be a client in a relationship with a second entity.

The CP 10 is an entity that produces content. Referring to FIG. 1, the CP 10 can include a 1st or 2nd terrestrial broadcaster, a cable system operator (SO), a multiple system operator (MSO), a satellite broadcaster, various Internet broadcasters, private content providers (CPs), etc. The content can include applications as well as broadcast content.

The SP 20 packetizes content provided by the CP 10. Referring to FIG. 1, the SP 20 packetizes content provided by the CP 10 into one or more services available for users.

The SP 20 can provide services to the client 100 in a uni-cast or multi-cast manner.

The CP 10 and the SP 20 can be configured in the form of one entity. For example, the CP 10 can function as the SP 20 by producing content and directly packetizing the produced content into services, and vice versa.

The NP 30 can provide a network environment for data exchange between the server 10 and/or 20 and the client 100. The NP 30 supports wired/wireless communication protocols and constructs environments therefor. In addition, the NP 30 can provide a cloud environment.

The client 100 can construct a home network and transmit/receive data.

The server can use and request a content protection means such as conditional access. In this case, the client 100 can use a means such as a cable card or downloadable CAS (DCAS), which corresponds to the content protection means of the server.

In addition, the client 100 can use an interactive service through a network. In this case, the client 100 can directly serve as the CP 10 and/or the SP 20 in a relationship with another client or indirectly function as a server of the other client.

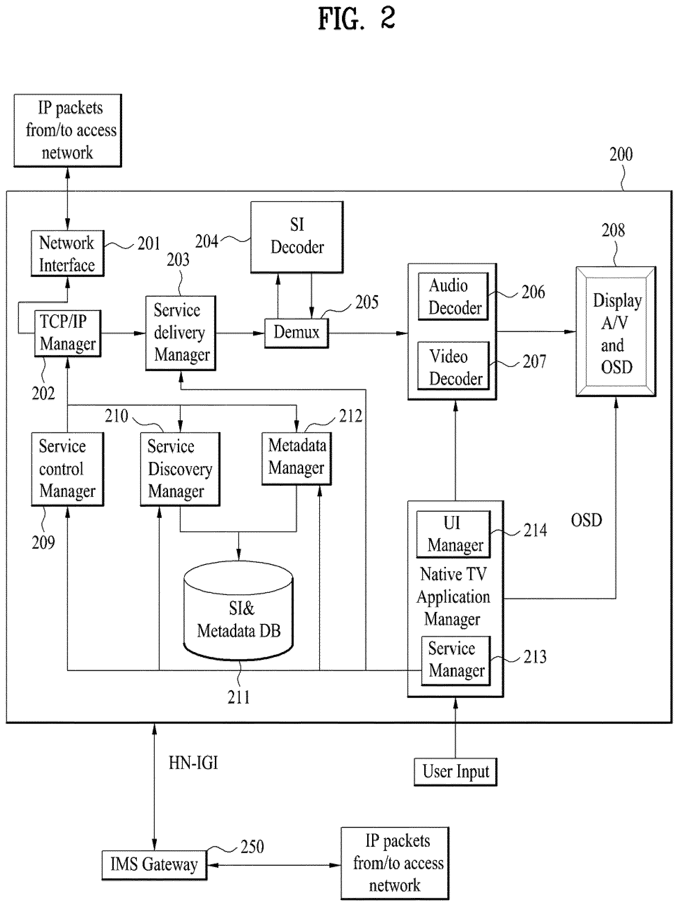

FIG. 2 is a schematic diagram of a digital receiver 200 according to an embodiment of the present invention. The digital receiver 200 may correspond to the client 100 shown in FIG. 1.

The digital receiver 200 may include a network interface 201, a TCP/IP manager 202, a service delivery manager 203, an SI (System Information, Service Information or Signaling Information) decoder 204, a demultiplexer 205, an audio decoder 206, a video decoder 207, a display A/V and OSD (On Screen Display) module 208, a service control manager 209, a service discovery manager 210, a SI & metadata database (DB) 211, a metadata manager 212, an application manager, etc.

The network interface 201 may receive or transmit IP packets including service data through a network. In other words, the network interface 201 may receive IP packets including at least one of text data, image data, audio data, and video data, used for SNS, as well as services and applications from a server connected thereto through a network.

The TCP/IP manager 202 may involve delivery of IP packets transmitted to the digital receiver 200 and IP packets transmitted from the digital receiver 200, that is, packet delivery between a source and a destination. The TCP/IP manager 202 may classify received packets according to an appropriate protocol and output the classified packets to the service delivery manager 205, the service discovery manager 210, the service control manager 209, and the metadata manager 212.

The service delivery manager 203 may control classification and processing of service data. The service delivery manager 203 may control real-time streaming data, for example, using real-time protocol/real-time control protocol (RTP/RTCP). In other words, the service delivery manager 203 may parse a real-time streaming data packet, transmitted on the basis of the RTP, according to the RTP and transmits the parsed data packet to the demultiplexer 205 or store the parsed data packet in the SI & metadata DB 211 under the control of the service manager 213. The service delivery manager 203 can feed back network reception information to the server on the basis of the RTP.

The demultiplexer 205 may demultiplex audio data, video data, SI from a received packet through packet identifier (PID) filtering and transmit the demultiplexed data to corresponding processors, that is, the audio/video decoder 206/207 and the SI decoder 204.

The SI decoder 204 may parse and/or decode SI data such as program specific information (PSI), program and system information protocol (PSIP), digital video broadcast-service information (DVB-SI), etc.

The SI decoder 204 may store the parsed and/or decoded SI data in the SI & metadata DB 211. The SI data stored in the SI & metadata DB 211 can be read or extracted and used by a component which requires the SI data. EPG data can also be read from the SI & metadata DB 211. This will be described below in detail.

The audio decoder 206 and the video decoder 207 respectively may decode audio data and video data, which are demultiplexed by the demultiplexer 205. The decoded audio data and video data may be provided to the user through the display unit 208.

The application manager may include a service manager 213 and a user interface (UI) manager 214, administrate the overall state of the digital receiver 200, provides a UI, and manage other mangers.

The UI manager 214 can receive a key input from the user and provide a graphical user interface (GUI) related to a receiver operation corresponding to the key input through OSD.

The service manager 213 may control and manage service-related managers such as the service delivery manager 203, the service discovery manager 210, the service control manager 209, and the metadata manager 212.

The service manager 213 may configure a channel map and enable channel control at the request of the user on the basis of the channel map.

The service manager 213 may receive service information corresponding to channel from the SI decoder 204 and set audio/video PID of a selected channel to the demultiplexer 205 so as to control the demultiplexing procedure of the demultiplexer 205.

The application manager can configure an OSD image or control configuration of the OSD image to provide a window for SNS on a predetermined region of the screen when the user requests SNS. The application manager can configure the OSD image or control the configuration of OSD image such that the SNS window can be determined and provided at the request of the user in consideration of other services, for example, a broadcast service. In other words, when the digital receiver 200 may provide a service (for example, SNS) through an image on the screen, the digital receiver 200 may configure the image such that it can appropriately cope with requests in consideration of relationship with other services, priority, etc.

The application manager can receive data for SNS from a related external server such as an SNS providing server or a manufacturer-provided server and store the received data in a memory such that the data is used to configure OSD for providing SNS at the request of the user and SNS may be provided through a predetermined area of the screen. Furthermore, the digital receiver 200 can store data, related with a service and input by the user during the service, in the memory in a similar manner such that the data is used to configure the service and, if required, process the data into a form required for another digital receiver and transmit the processed data to the other digital receiver or a related service server.

In addition, the application manager, the controller or the digital receiver can control information or an action corresponding to a request of the user to be executed when the user makes the request while using the SNS. For example, when the user selects input data of another user or a region corresponding to the input data while using the SNS, the application manager, the controller or the digital receiver may control the first process and/or the second process for handling the selected data or region to be performed and control the first result and/or the second result to be output in an appropriate form. The first result and/or the second result can include information, an action, a related UI, etc. and be configured in various forms such as text, an image, audio/video data, etc. The first result and/or the second result can be manually or automatically provided and performed by the digital receiver.

When the user moves the first result (e.g. image data) to a broadcast program or broadcast service output area through drag & drop, the digital receiver can perform the second process (e.g., search process) on data relating to the first result using an electronic program guide (EPG) or electronic service guide (ESG) (referred to as 'broadcast guide' hereinafter) (i.e., a search engine) to provide a second result. Here, the second result can be provided in a form similar to the broadcast guide used as a search engine or provided as a separately configured UI. When the second result is provided in the form of the broadcast guide, other data can be provided with the second result. In this case, the second result can be configured such that it is distinguished from other data so as to allow the user to easily recognize the second data. To discriminate the second result from other data, the second result can be highlighted, hatched, and provided in 3-dimensional (3D) form.

In the execution of the second process, the digital receiver can automatically determine the type of the second process and whether or not to perform the second process on the basis of a position variation of the first result. In this case, coordinate information of the screen can be used for determining whether the position of the first result is changed or for information on a changed position between the second process and the first result. For example, when a service and/or OSD may be displayed on the screen, the digital receiver can determine and store coordinate information about the displayed service and/or OSD. Accordingly, the digital receiver can be aware of coordinate information about a service and data being provided to the screen in advance and thus can recognize a variation in the position (information) of the first result on the basis of the coordinate information and perform the second process based on the position of the first result.

The service discovery manager 210 may provide information required to select a service provider that provides a service. Upon receipt of a signal for selecting a channel from the service manager 213, the service discovery manager 210 discovers a service on the basis of the received signal.

The service control manager 209 may select and control a service. For example, the service control manager 209 may perform service selection and control using IGMP (Internet Group Management Protocol) or real time streaming protocol (RTSP) when the user selects a live broadcast service and using RTSP when the user selects a video on demand (VOD) service.

The schemes or protocols described in the specification are exemplified in order to aid in understanding of the present invention for convenience of explanations and the scope of the present invention is not limited thereto. Accordingly, the schemes or protocols can be determined in consideration of conditions different from the exemplified ones and other schemes or protocols can be used.

The metadata manager 212 may manage metadata regarding services and store metadata in the SI & metadata DB 211.

The SI & metadata DB 211 may store SI data decoded by the SI decoder 204, metadata managed by the metadata manager 212, and information required to select a service provider, which is provided by the service discovery manager 210. In addition, the SI & metadata DB 211 can store system set-up data.

An IMS (IP Multimedia Subsystem) gateway 250 may include functions required to access an IMS based IPTV services.

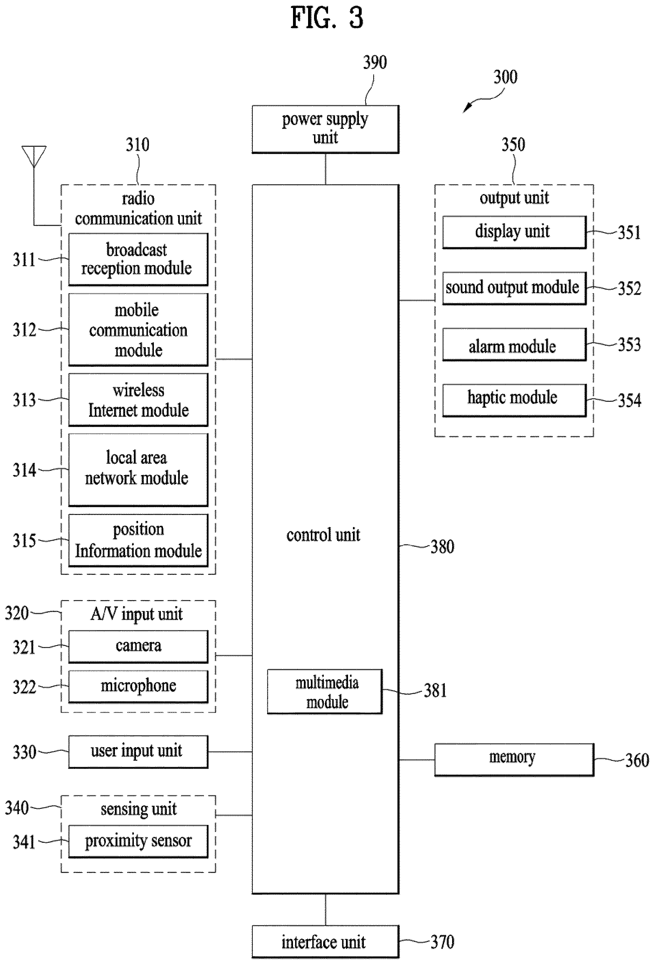

FIG. 3 is a block diagram of a mobile terminal 300 in accordance with an embodiment of the present invention. With reference to FIG. 3, the mobile terminal 300 includes a wireless communication unit 310, an A/V (audio/video) input unit 320, an user input unit 330, a sensing unit 340, an output unit 350, a memory 360, an interface unit 370, a controller 380, and a power supply unit 390. FIG. 3 shows the mobile terminal 300 having various components, but it is understood that implementing all of the illustrated components is not a requirement. More or fewer components may be implemented according to various embodiments.

The wireless communication unit 310 typically includes one or more components which permit wireless communication between the mobile terminal 300 and a wireless communication system or network within which the mobile terminal 300 is located. For instance, the wireless communication unit 310 can include a broadcast receiving module 311, a mobile communication module 312, a wireless Internet module 313, a short-range communication module 314, and a position-location module 315.

The broadcast receiving module 311 receives a broadcast signal and/or broadcast associated information from an external broadcast managing server via a broadcast channel. The broadcast channel may include a satellite channel and a terrestrial channel. At least two broadcast receiving modules 311 can be provided in the mobile terminal 300 to facilitate simultaneous reception of at least two broadcast channels or broadcast channel switching.

The broadcast managing server is generally a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and/or a data broadcast signal, among other signals. If desired, the broadcast signal may further include a broadcast signal combined with a TV or radio broadcast signal.

The broadcast associated information includes information associated with a broadcast channel, a broadcast program, or a broadcast service provider. Furthermore, the broadcast associated information can be provided via a mobile communication network. In this case, the broadcast associated information can be received by the mobile communication module 312.

The broadcast associated information can be implemented in various forms. For instance, broadcast associated information may include an electronic program guide (EPG) of digital multimedia broadcasting (DMB) and an electronic service guide (ESG) of digital video broadcast-handheld (DVB-H).

The broadcast receiving module 311 may be configured to receive broadcast signals transmitted from various types of broadcast systems. By non-limiting example, such broadcasting systems may include digital multimedia broadcasting-terrestrial (DMB-T), digital multimedia broadcasting-satellite (DMB-S), digital video broadcast-handheld (DVB-H), digital video broadcast-convergence of broadcasting and mobile services (DVB-CBMS), Open Mobile Alliance Broadcast (OMA-BCAST), the data broadcasting system known as media forward link only (MediaFLOTM) and integrated services digital broadcast-terrestrial (ISDB-T). Optionally, the broadcast receiving module 311 can be configured to be suitable for other broadcasting systems as well as the above-noted digital broadcasting systems.

The broadcast signal and/or broadcast associated information received by the broadcast receiving module 311 may be stored in a suitable device, such as the memory 360.

The mobile communication module 312 transmits/receives wireless signals to/from one or more network entities (e.g., a base station, an external terminal, and/or a server) via a mobile network such as GSM (Global System for Mobile communications), CDMA (Code Division Multiple Access), or WCDMA (Wideband CDMA). Such wireless signals may carry audio, video, and data according to text/multimedia messages.

The wireless Internet module 313 supports Internet access for the mobile terminal 300. This module may be internally or externally coupled to the mobile terminal 300. The wireless Internet technology can include WLAN (Wireless LAN), Wi-Fi, WibroTM (Wireless broadband), WimaxTM (World Interoperability for Microwave Access), HSDPA (High Speed Downlink Packet Access), GSM, CDMA, WCDMA, or LTE (Long Term Evolution) .

Wireless Internet access by WibroTM, HSPDA, GSM, CDMA, WCDMA, or LTE is achieved via a mobile communication network. In this regard, the wireless Internet module 313 may be considered as being a kind of the mobile communication module 312 to perform the wireless Internet access via the mobile communication network.

The short-range communication module 314 facilitates relatively short-range communications. Suitable technologies for implementing this module include radio frequency identification (RFID), infrared data association (IrDA), ultra-wideband (UWB), as well as the networking technologies commonly referred to as BluetoothTM and ZigBeeTM, to name a few.

The position-location module 315 identifies or otherwise obtains the location of the mobile terminal 100. According to one embodiment, this module may be implemented with a global positioning system (GPS) module. The GPS module 315 is able to precisely calculate current 3-dimensional position information based on at least longitude, latitude or altitude and direction (or orientation) by calculating distance information and precise time information from at least three satellites and then applying triangulation to the calculated information. Location information and time information are calculated using three satellites, and errors of the calculated location position and one or more time information are then amended (or corrected) using another satellite. In addition, the GPS module 315 is able to calculate speed information by continuously calculating a real-time current location.

With continued reference to FIG. 3, the audio/video (A/V) input unit 320 is configured to provide audio or video signal input to the mobile terminal 300. As shown, the A/V input unit 320 includes a camera 321 and a microphone 322. The camera 321 receives and processes image frames of still pictures or video, which are obtained by an image sensor in a video call mode or a photographing mode. Furthermore, the processed image frames can be displayed on the display 351.

The image frames processed by the camera 321 can be stored in the memory 360 or can be transmitted to an external recipient via the wireless communication unit 310. Optionally, at least two cameras 321 can be provided in the mobile terminal 300 according to the environment of usage.

The microphone 322 receives an external audio signal while the portable device is in a particular mode, such as phone call mode, recording mode and voice recognition. This audio signal is processed and converted into electronic audio data. The processed audio data is transformed into a format transmittable to a mobile communication base station via the mobile communication module 312 in a call mode. The microphone 322 typically includes assorted noise removing algorithms to remove noise generated in the course of receiving the external audio signal.

The user input unit 330 generates input data responsive to user manipulation of an associated input device or devices. Examples of such devices include a keypad, a dome switch, a touchpad (e.g., static pressure/capacitance), a jog wheel, and a jog switch.

The sensing unit 340 provides sensing signals for controlling operations of the mobile terminal 300 using status measurements of various aspects of the mobile terminal. For instance, the sensing unit 340 may detect an open/closed status of the mobile terminal 100, the relative positioning of components (e.g., a display and keypad) of the mobile terminal 300, a change of position (or location) of the mobile terminal 300 or a component of the mobile terminal 300, a presence or absence of user contact with the mobile terminal 300, and an orientation or acceleration/deceleration of the mobile terminal 300. As an example, a mobile terminal 300 configured as a slide-type mobile terminal is considered. In this configuration, the sensing unit 340 may sense whether a sliding portion of the mobile terminal is open or closed. According to other examples, the sensing unit 340 senses the presence or absence of power provided by the power supply unit 390, and the presence or absence of a coupling or other connection between the interface unit 370 and an external device. According to one embodiment, the sensing unit 340 can include a proximity sensor 341.

The output unit 350 generates output relevant to the senses of sight, hearing, and touch. Furthermore, the output unit 350 includes the display 351, an audio output module 352, an alarm unit 353, a haptic module 354, and a projector module 355.

The display 351 is typically implemented to visually display (output) information associated with the mobile terminal 300. For instance, if the mobile terminal is operating in a phone call mode, the display will generally provide a user interface (UI) or graphical user interface (GUI) which includes information associated with placing, conducting, and terminating a phone call. As another example, if the mobile terminal 300 is in a video call mode or a photographing mode, the display 351 may additionally or alternatively display images which are associated with these modes, the UI or the GUI.

The display module 351 may be implemented using known display technologies. These technologies include, for example, a liquid crystal display (LCD), a thin film transistor-liquid crystal display (TFT-LCD), an organic light-emitting diode display (OLED), a flexible display and a three-dimensional display. The mobile terminal 300 may include one or more of such displays.

Some of the displays can be implemented in a transparent or optical transmittive type, i.e., a transparent display. A representative example of the transparent display is the TOLED (transparent OLED). A rear configuration of the display 351 can be implemented as the optical transmittive type as well. In this configuration, a user may be able to see an object located at the rear of a terminal body on a portion of the display 351 of the terminal body.

At least two displays 351 can be provided in the mobile terminal 300 in accordance with one embodiment of the mobile terminal 300. For instance, a plurality of displays can be arranged to be spaced apart from each other or to form a single body on a single face of the mobile terminal 300. Alternatively, a plurality of displays can be arranged on different faces of the mobile terminal 300.

If the display 351 and a sensor for detecting a touch action (hereinafter called 'touch sensor') are configured as a mutual layer structure (hereinafter called 'touch screen'), the display 351 is usable as an input device as well as an output device. In this case, the touch sensor can be configured as a touch film, a touch sheet, or a touchpad.

The touch sensor can be configured to convert pressure applied to a specific portion of the display 351 or a variation of capacitance generated from a specific portion of the display 351 to an electronic input signal. Moreover, the touch sensor is configurable to detect pressure of a touch as well as a touched position or size.

If a touch input is made to the touch sensor, a signal(s) corresponding to the touch input is transferred to a touch controller. The touch controller processes the signal(s) and then transfers the processed signal(s) to the controller 380. Therefore, the controller 380 is made aware when a prescribed portion of the display 351 is touched.

Referring to FIG. 3, a proximity sensor 341 can be provided at an internal area of the mobile terminal 300 enclosed by the touch screen or around the touch screen. The proximity sensor is a sensor that detects a presence or non-presence of an object approaching a prescribed detecting surface or an object existing (or located) around the proximity sensor using an electromagnetic field strength or infrared ray without mechanical contact. Hence, the proximity sensor 341 is more durable than a contact type sensor and also has utility broader than the contact type sensor.

The proximity sensor 341 can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, and an infrared proximity sensor. If the touch screen includes the electrostatic capacity proximity sensor, it is configured to detect the proximity of a pointer using a variation of an electric field according to the proximity of the pointer. In this configuration, the touch screen (touch sensor) can be considered as the proximity sensor.

For clarity and convenience of explanation, an action for enabling the pointer approaching the touch screen to be recognized as placed on the touch screen may be named 'proximity touch' and an action of enabling the pointer to actually come into contact with the touch screen may named 'contact touch'. And, a position, at which the proximity touch is made to the touch screen using the pointer, may mean a position of the pointer vertically corresponding to the touch screen when the pointer makes the proximity touch.

The proximity sensor detects a proximity touch and a proximity touch pattern (e.g., a proximity touch distance, a proximity touch duration, a proximity touch position, a proximity touch shift state). Information corresponding to the detected proximity touch action and the detected proximity touch pattern can be output to the touch screen.

The audio output module 352 functions in various modes including a call-receiving mode, a call-placing mode, a recording mode, a voice recognition mode, and a broadcast reception mode to output audio data which is received from the wireless communication unit 310 or is stored in the memory 360. During operation, the audio output module 352 outputs audio relating to a particular function (e.g., call received, message received). The audio output module 352 may be implemented using one or more speakers, buzzers, other audio producing devices, and combinations of these devices.

The alarm unit 353 outputs a signal for announcing the occurrence of a particular event associated with the mobile terminal 300. Typical events include a call received, a message received and a touch input received. The alarm unit 353 is able to output a signal for announcing the event occurrence by way of vibration as well as video or audio signal. The video or audio signal can be output via the display 351 or the audio output module 352. Hence, the display 351 or the audio output module 352 can be regarded as a part of the alarm unit 353.

The haptic module 354 generates various tactile effects that can be sensed by a user. Vibration is a representative one of the tactile effects generated by the haptic module 354. The strength and pattern of the vibration generated by the haptic module 354 are controllable. For instance, different vibrations can be output in a manner of being synthesized together or can be output in sequence.

The haptic module 354 is able to generate various tactile effects as well as the vibration. For instance, the haptic module 354 may generate an effect attributed to the arrangement of pins vertically moving against a contact skin surface, an effect attributed to the injection/suction power of air though an injection/suction hole, an effect attributed to the skim over a skin surface, an effect attributed to a contact with an electrode, an effect attributed to an electrostatic force, and an effect attributed to the representation of a hot/cold sense using an endothermic or exothermic device.

The haptic module 354 can be implemented to enable a user to sense the tactile effect through a muscle sense of a finger or an arm as well as to transfer the tactile effect through direct contact. Optionally, at least two haptic modules 354 can be provided in the mobile terminal 300 in accordance with an embodiment of the mobile terminal 300.

The memory 360 is generally used to store various types of data to support the processing, control, and storage requirements of the mobile terminal 300. Examples of such data include program instructions for applications operating on the mobile terminal 300, contact data, phonebook data, messages, audio, still pictures (or photo), and moving pictures. Furthermore, a recent use history or a cumulative use frequency of each data (e.g., use frequency for each phonebook, each message or each multimedia file) can be stored in the memory 360.

Moreover, data for various patterns of vibration and/or sound output in response to a touch input to the touch screen can be stored in the memory 360.

The memory 360 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory or XD memory), or other similar memory or data storage device. Furthermore, the mobile terminal 300 is able to operate in association with a web storage for performing a storage function of the memory 360 on the Internet.

The interface unit 370 may be implemented to couple the mobile terminal 100 with external devices. The interface unit 370 receives data from the external devices or is supplied with power and then transfers the data or power to the respective elements of the mobile terminal 300 or enables data within the mobile terminal 300 to be transferred to the external devices. The interface unit 370 may be configured using a wired/wireless headset port, an external charger port, a wired/wireless data port, a memory card port, a port for coupling to a device having an identity module, audio input/output ports, video input/output ports, and/or an earphone port.

The identity module is a chip for storing various kinds of information for authenticating a usage authority of the mobile terminal 300 and can include a User Identify Module (UIM), a Subscriber Identity Module (SIM), and/or a Universal Subscriber Identity Module (USIM). A device having the identity module (hereinafter called 'identity device') can be manufactured as a smart card. Therefore, the identity device is connectible to the mobile terminal 300 via the corresponding port.

When the mobile terminal 300 is connected to an external cradle, the interface unit 370 becomes a passage for supplying the mobile terminal 300 with a power from the cradle or a passage for delivering various command signals input from the cradle by a user to the mobile terminal 300. Each of the various command signals input from the cradle or the power can operate as a signal enabling the mobile terminal 300 to recognize that it is correctly loaded in the cradle.

The controller 380 typically controls the overall operations of the mobile terminal 300. For example, the controller 380 performs the control and processing associated with voice calls, data communications, and video calls. The controller 380 may include a multimedia module 381 that provides multimedia playback. The multimedia module 381 may be configured as part of the controller 380, or implemented as a separate component.

Moreover, the controller 380 is able to perform a pattern (or image) recognizing process for recognizing a writing input and a picture drawing input carried out on the touch screen as characters or images, respectively.

The power supply unit 390 provides power required by various components of the mobile terminal 300. The power may be internal power, external power, or combinations of internal and external power.

Various embodiments described herein may be implemented in a computer-readable medium using, for example, computer software, hardware, or some combination of computer software and hardware. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which performs one or more of the functions and operations described herein. The software codes can be implemented with a software application written in any suitable programming language and may be stored in memory such as the memory 360, and executed by a controller or processor, such as the controller 380.

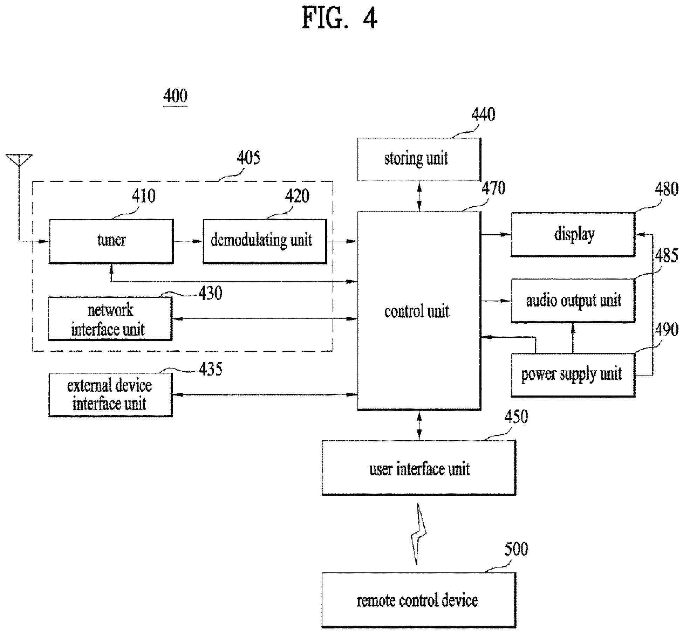

FIG. 4 illustrates a digital receiver according to another embodiment of the present invention.

Referring to FIG. 4, an exemplary digital receiver 400 according to the present invention may include a broadcast receiving unit 405, an external device interface 435, a storage unit 440, a user input interface 450, a controller 470, a display unit 480, an audio output unit 485, a power supply unit 490, and a photographing unit (not shown). The broadcast receiving unit305 may include at least one of one or more tuner 410, a demodulator 420, and a network interface 430. The broadcast receiving unit 405 may include the tuner 410 and the demodulator 420 without the network interface 430, or may include the network interface 430 without the tuner 410 and the demodulator 420. The broadcast receiving unit 405 may include a multiplexer (not shown) to multiplex a signal, which is subjected to the tuner 410 and demodulated by the demodulator 420, and a signal received through the network interface 40. In addition, the broadcast receiving unit 405 can include a demultiplexer (not shown) and demultiplex a multiplexed signal, a demodulated signal, or a signal received through the network interface 430.

The tuner 410 may receive a radio frequency (RF) broadcast signal by tuning to a channel selected by the user from among RF broadcast signals received through an antenna or all previously stored channels.

The demodulator 420 may receive a digital IF (Intermediate Frequency) signal (DIF) converted by the tuner 410 and demodulate the DIF signal.

A stream signal output from the demodulator 420 may be input to the controller 470. The controller 470 can control demultiplexing, audio/video signal processing, etc. Furthermore, the controller 470 can control output of an image through the display unit 480 and output of audio through the audio output unit 485.

The external device interface 435 may provide an environment for interfacing external devices with the digital receiver 400. To implement this, the external device interface 435 may include an A/V input/output unit (not shown) or an RF communication unit (not shown).

The external device interface 435 can be connected with external devices such as a digital versatile disk (DVD), a Blu-ray player, a game device, a camera, a camcorder, a computer (notebook computer), a Cloud and a mobile device (e.g., a Smart Phone, a tablet PC, and the like) in a wired/wireless manner.

The A/V input/output unit may include a USB (Universal Serial Bus) terminal, a composite video banking sync (CVBS) terminal, a component terminal, an S-video terminal (analog), a digital visual interface (DVI) terminal, a high definition multimedia interface (HDMI) terminal, an RGB terminal, a D-SUB terminal, etc.

The RF communication unit can perform near field communication. The digital receiver 400 can be networked with other electronic apparatuses according to communication protocols such as Bluetooth, radio frequency identification (RFID), infrared data association (IrDA), ultra wideband (UWB), ZigBee, and digital living network alliance (DLNA), for example.

The network interface 430 may provide an interface for connecting the digital receiver 400 to wired/wireless networks.

Using the network interface 430, the digital receiver can transmit/receive data to/from other users or other electronic apparatuses or access a predetermined web page through a network connected thereto or another network linked to the connected network.

The network interface 430 can selectively receive a desired application from among publicly open applications through a network.

The storage unit 440 may store programs for signal processing and control and store a processed video, audio or data signal.

In addition, the storage unit 440 may execute a function of temporarily storing a video, audio or data signal input from the external device interface 435 or the network interface 430. The storage unit 440 may store information about a predetermined broadcast channel through a channel memory function.

The storage unit 440 can store an application or a list of applications input from the external device interface 435 or the network interface 430. The storage unit 440 may store various platforms which will be described later. The storage unit 440 can include storage media of one or more types, such as a flash memory type, a hard disk type, a multimedia card micro type, a card type memory (e.g. SD or XD memory), RAM, EEPROM, etc. The digital receiver 400 may reproduce content files (a video file, a still image file, a music file, a text file, an application file, etc.) and provide them to the user.

While FIG. 4 illustrates an embodiment in which the storage unit 440 is separated from the controller 470, the configuration of the digital receiver 400 is not limited thereto and the storage unit 440 may be included in the controller 470.

The user input interface 450 may transmit a signal input by the user to the controller 470 or deliver a signal output from the controller 470 to the user.

For example, the user input interface 450 can receive control signals such as a power on/off signal, a channel selection signal, an image setting signal, etc. from the remote controller 500 or transmit control signals of the controller 470 to the remote controller 500 according to various communication schemes such as RF communication, IR communication, and the like.

The user input interface 450 can transmit control signals input through a power key, a channel key, a volume key, and a local key (not shown) of a set value to the controller 470.

The user input interface 450 can transmit a control signal input from a sensing unit (not shown) which senses a gesture of the user or deliver a signal of the controller 470 to the sensing unit (not shown). Here, the sensing unit (not shown) may include a touch sensor, a voice sensor, a position sensor, an action sensor, an acceleration sensor, a gyro sensor, a speed sensor, a tilt sensor, a temperature sensor, a pressure or backpressure sensor, etc.

The controller 470 can generate and output a signal for video or audio output by demultiplexing streams input through the tuner 410, the demodulator 420 or the external device interface 435 or processing demultiplexed signals.

A video signal processed by the controller 470 can be input to the display unit 380 and displayed as an image through the display unit 480. In addition, the video signal processed by the controller 470 can be input to an external output device through the external device interface 435.

An audio signal processed by the controller 470 can be applied to the audio output unit 485. Otherwise, the audio signal processed by the controller 470 can be applied to an external output device through the external device interface 435.

The controller 470 may include a demultiplexer and an image processor, which are not shown in FIG. 4.

The controller 470 can control the overall operation of the digital receiver 300. For example, the controller 470 can control the tuner 410 to tune to an RF broadcast corresponding to a channel selected by the user or a previously stored channel.

The controller 470 can control the digital receiver 400 according to a user command input through the user input interface 450 or an internal program. Particularly, the controller 470 can control the digital receiver 400 to be linked to a network to download an application or application list that the user desires to the digital receiver 400.

For example, the controller 470 may control the tuner 410 to receive a signal of a channel selected in response to a predetermined channel selection command received through the user input interface 450. In addition, the controller 470 may process a video, audio or data signal corresponding to the selected channel. The controller 470 may control information on a channel selected by the user to be output with a processed video or audio signal through the display unit 480 or the audio output unit 485.

Alternatively, the controller 470 may control a video signal or an audio signal received from an external apparatus, for example, a camera or a camcorder through the external device interface 435 to be output through the display unit 480 or the audio output unit 485 according to an external device image reproduction command received through the user input interface 450.

The controller 470 can control the display unit 480 to display images. For example, the controller 470 can control a broadcast image input through the tuner 410, an external input image received through the external device interface 435, an image input through the network interface 430, or an image stored in the storage unit 440 to be displayed on the display unit 480. Here, an image displayed on the display unit 480 can be a still image or video, and it can be a 2D or 3D image.

The controller 470 can control reproduction of content. Here, the content may be content stored in the digital receiver 400, received broadcast content, or content input from an external device. The content may include at least one of a broadcast image, an external input image, an audio file, a still image, an image of a linked web, and a text file.

The controller 470 can control display of applications or an application list, downloadable from the digital receiver 400 or an external network, when an application view menu is selected.

The controller 470 can control installation and execution of applications downloaded from an external network in addition to various user interfaces. Furthermore, the controller 470 can control an image relating to an application executed by user selection to be displayed on the display unit 480.

The digital receiver 400 may further include a channel browsing processor (not shown) which generates a thumbnail image corresponding to a channel signal or an external input signal.

The channel browsing processor can receive a stream signal (e.g., TS) output from the demodulator 420 or a stream signal output from the external device interface 435 and extract an image from the received stream signal to generate a thumbnail image. The generated thumbnail image can be directly input to the controller 470 or can be encoded and then input to the controller 470. Also, the thumbnail image can be coded into a stream and then applied to the controller 470. The controller 470 can display a thumbnail list including a plurality of thumbnail images on the display unit 480 using thumbnail images input thereto. The thumbnail images included in the thumbnail list can be updated sequentially or simultaneously. Accordingly, the user can conveniently check content of a plurality of broadcast channels.

The display unit 480 may convert a video signal, a data signal, and an OSD signal processed by the controller 470 and a video signal and a data signal received from the external device interface 435 into RGB signals to generate driving signals. The display unit 480 may be a PDP, an LCD, an OLED, a flexible display, a 3D display or the like. The display unit 480 may be configured as a touch-screen and used as an input device rather than an output device. The audio output unit 485 receives a signal audio-processed by the controller 470, for example, a stereo signal, a 3.1 channel signal or a 5.1 channel signal, and outputs the received signal as audio. The audio output unit 485 can be configured as one of various speakers.

The digital receiver 400 may further include the sensing unit (not shown) for sensing a gesture of the user, which includes at least one of a touch sensor, a voice sensor, a position sensor, and an action sensor, as described above. A signal sensed by the sensing unit (not shown) can be delivered to the controller 470 through the user input interface 450. The digital receiver 400 may further include the photographing unit (not shown) for photographing the user. Image information acquired by the photographing unit (not shown) can be supplied to the controller 470. The controller 470 may sense a gesture of the user from an image captured by the photographing unit (not shown) or a signal sensed by the sensing unit (not shown), or by combining the image and the signal.

The power supply unit 490 may supply power to the digital receiver 400. Particularly, the power supply unit 490 can supply power to the controller 470 which can be implemented as a system-on-chip (SoC), the display unit 480 for displaying images, and the audio output unit 485 for audio output.

The remote controller 500 may transmit user input to the user input interface 450. To achieve this, the remote controller 500 can use Bluetooth, RF communication, IR communication, UWB, ZigBee, etc. In addition, the remote controller 500 can receive audio, video or data signal output from the user input interface 350 and display the received signal or output the same as audio or vibration.

The functions of the application manager shown in FIG. 2 can be divided and executed by the controller 470, the storage unit 440, the user interface 450, the display unit 480 and the audio output unit 485 which are controlled by the controller 470.

The digital receivers shown in FIGS. 2 and 4 are exemplary and components thereof can be integrated, added or omitted according to specifications thereof. That is, two or more components can be integrated into one component or one component can be subdivided into two or more components as required. The function executed by each component is exemplified to describe embodiments of the present invention and detailed operations or devices do not limit the scope of the present invention. Some of the components shown in FIG. 2 may be omitted or a component (not shown in FIG. 2) may be added as required. The digital receiver according to the present invention may not include the tuner and the demodulator, differently from the digital receivers shown in FIGS. 2 and 4, and may receive content through the network interface or the external device interface and reproduce the content.

The digital receiver is an example of image signal processors which process an image stored therein or an input image. Other examples of the image signal processors may include a set-top box (STB) which does not include the display unit 380 and the audio output unit 485 shown in FIG. 4, a DVD player, a Blu-ray player, a game device, a computer, etc.

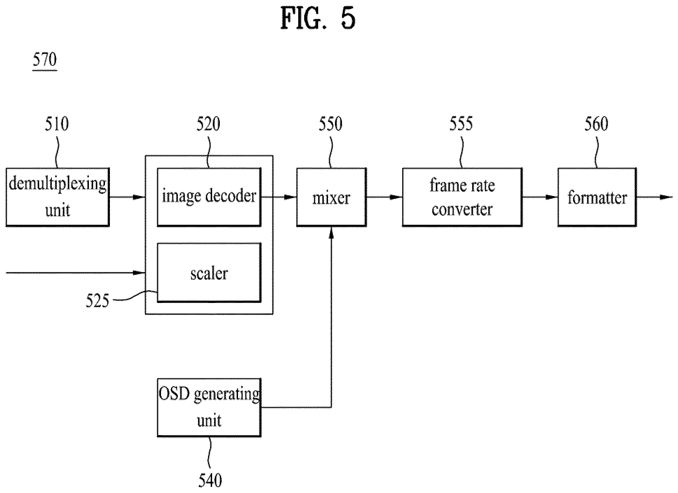

FIG. 5 illustrates a digital receiver according to another embodiment of the present invention. Particularly, FIG. 5 shows a configuration for implementing a 3D digital receiver, which can be included in the configurations of FIGS. 2 and 3.

The digital receiver according to the present invention may include a demultiplexer 510, an image processor 520, an OSD generator 540, a mixer 550, a frame rate converter (FRC) 555, and a 3D formatter (or an Output formatter) 560.

The demultiplexer 510 can demultiplex an input stream signal into an MPEG-2 TS image, an audio signal and a data signal, for example.

The image processor can process a demultiplexed image signal using a video decoder 525 and a scaler 535. The video decoder 525 can decode the demultiplexed image signal and the scaler 535 can scale the resolution of the decoded image signal such that the image signal can be displayed.

The image signal decoded by the image processor 520 may be input to the mixer 550.

The OSD generator 540 may generate OSD data automatically or according to user input. For example, the OSD generator 540 may generate data to be displayed on the screen of an output unit in the form of an image or text on the basis of a control signal of a user input interface. OSD data generated by the OSD generator 540 may include various data such as a user interface image of the digital receiver, various menu screens, widget, icons, and information on ratings. The OSD generator 540 can generate a caption of a broadcast image or data for displaying EPG based broadcast information.

The mixer 550 may mix the OSD data generated by the OSD generator 540 and the image signal processed by the image processor 520. The mixer 550 may provide the mixed signal to the 3D formatter 560. By mixing the decoded image signal and the OSD data, OSD may be overlaid on a broadcast image or external input image.

The frame rate converter (FRC) 555 may convert a frame rate of input video. For example, the frame rate converter 555 can convert the frame rate of an input 60Hz video to a frame rate of 120Hz or 240Hz, according to an output frequency of the output unit. The frame rate converter 555 may be bypassed when frame conversion is not executed.

The 3D formatter 560 may change the output of the frame rate converter 555, which is input thereto, into a form suitable for the output format of the output unit. For example, the 3D formatter 560 can output an RGB data signal. In this case, this RGB data signal can be output according to low voltage differential signaling (LVDS) or mini-LVDS. When a 3D image signal output from the frame rate converter 555 is input to the 3D formatter 560, the 3D formatter 560 can format the 3D image signal such that the 3D image signal is matched to the output format of the output unit, to thereby support a 3D service.

An audio processor (not shown) may audio-process a demultiplexed audio signal. The audio processor (not shown) can support various audio formats. For example, when audio signals are encoded in MPEG-2, MPEG-4, advanced audio coding (AAC), high efficiency-AAC (HE-AAC), AC-3 and bit sliced audio coding (BSAC) formats, the audio processor (not shown) can include decoders corresponding to the formats to process the audio signals. Furthermore, the audio processor (not shown) can control base, treble and volume.

In addition, a data processor (not shown) can process a demultiplexed data signal. For example, when a demultiplexed data signal is encoded, the data processor (not shown) can decode the encoded demultiplexed data signal. Here, the encoded data signal may be EPG information including broadcast information such as the start time and end time (or duration) of a broadcast program which is broadcast through each channel.

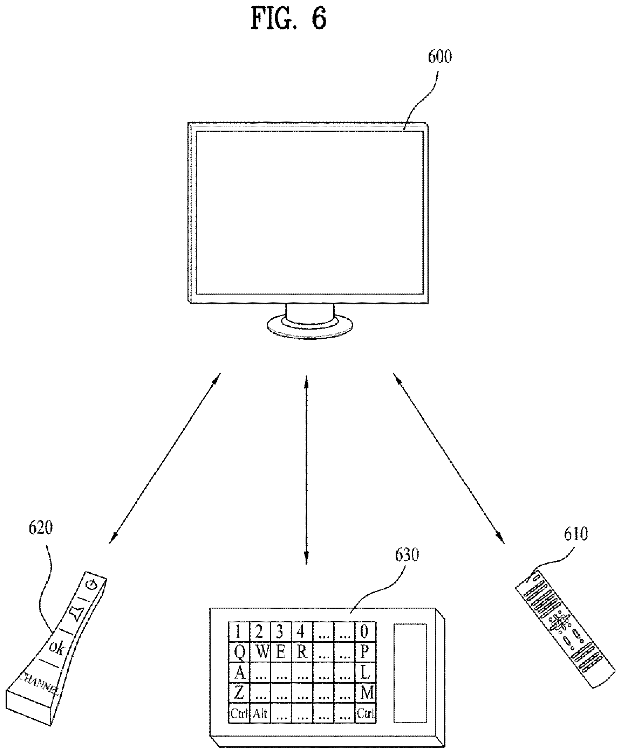

FIG. 6 illustrates remote controllers of a digital receiver according to an embodiment of the present invention.

To execute various operations for implementing the present invention according to embodiments, various user interface devices (UIDs) which can communicate with a digital receiver 600 in a wired/wireless manner can be used as remote controllers.

The remote controllers can use various communication protocols such as Bluetooth, RFID, IrDA, UWB, ZigBee, DLNA, etc.

UIDs can include a mobile device (e.g., a smart phone, a tablet PC, and the like), a magic remote controller 620 and a remote controller 630 equipped with a keyboard and a touch pad in addition to a general remote controller 610.

The magic remote controller 620 may include a gyro sensor mounted therein to sense vibration of a user's hand or rotation. That is, the magic remote controller 620 can move a pointer according to up, down, left and right motions of the user such that the user can easily execute a desired action, for example, easily control a channel or a menu.

The remote controller 630 including the keyboard and touch pad can facilitate text input through the keyboard and control of movement of a pointer and magnification and reduction of a picture or video through the touch pad.

The digital device described in the present specification can be operated by based on WebOS platform. Hereinafter, a WebOS based process or algorithm may be performed by the controller of the above-described digital device. The controller includes the controllers of FIGs. 2 to 5 and has wide concepts. Accordingly, hereinafter, a component for processing WebOS based services, applications, content, etc., including software, firmware or hardware in a digital device is referred to a controller.

Such a WebOS based platform may improve development independency and functional extensibility by integrating services, applications, etc. based on a Luna-service bus, for example, and increase application development productivity based on web application framework. In addition, system resources, etc. may be efficiently used via a WebOS process and resource management to support multitasking.

A WebOS platform described in the present specification may be available or loaded not only for stationary devices such as personal computers (PCs), TVs and set top boxes (STBs) but also for mobile devices such as cellular phones, smartphones tablet PCs, laptops, and wearable devices.

A software structure for a digital device is a monolithic structure which solves conventional problems depending on markets, is a single process and closed product based on multi-threading, and has difficulties in terms of external applications. In pursuit of new platform based development, cost innovation via chipset replacement and UI application and external application development efficiency, layering and componentization are performed to obtain a 3-layered structure and an add-on structure for an add-on, a single source product and an open application. Recently, modular design of a software structure has been conducted in order to provide a web open application programming interface (API) for an echo system and modular architecture of a functional unit or a native open API for a game engine, and thus a multi-process structure based on a service structure has been produced.

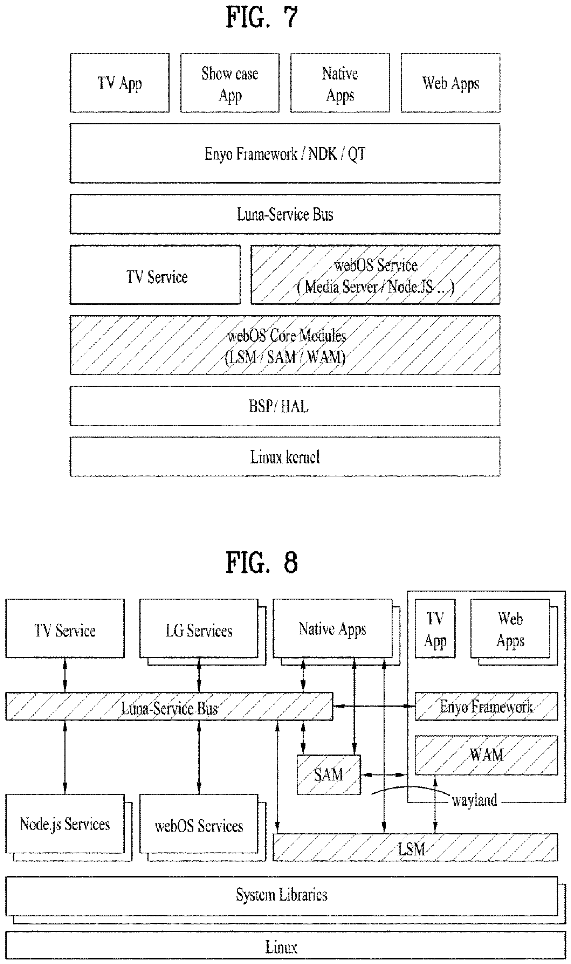

FIG. 7 is a diagram illustrating WebOS architecture according to one embodiment of the present invention.

The architecture of a WebOS platform will now be described with reference to FIG. 7.

The platform may be largely divided into a kernel, a webOS core platform based on a system library, an application, a service, etc.

The architecture of the WebOS platform has a layered structure. OS is provided at a lowest layer, system library(s) are provided at a next highest layer and applications are provided at the highest layer.

First, the lowest layer is an OS layer including a Linux kernel such that Linux is included as an OS of the digital device.

At layers higher than the OS layer, a board support package (BSP)/hardware abstraction layer (HAL) layer, a WebOS core modules layer, a service layer, a Luna-service bus layer and an Enyo framework/native developer's kit (NDK)/QT layer are sequentially provided. At the highest layer, an application layer is provided.

One or more layers of the above-described WebOS layered structure may be omitted and a plurality of layers may be combined to one layer and one layer may be divided into a plurality of layers.

The WebOS core module layer may include a Luna surface manager (LSM) for managing a surface window, etc., a system & application manager (SAM) for managing execution and performance status of applications, etc., and a web application manager (WAM) for managing web applications based on WebKit.

The LSM manages an application window displayed on a screen. The LSM may control display hardware (HW) and provide a buffer for rendering content necessary for applications, and compose and output results of rendering a plurality of applications on a screen.

The SAM manages policy according to several conditions of systems and applications.

The WAM is based on Enyo framework, because a WebOS regards a web application as a basic application.

An application may use a service via a Luna-service bus. A service may be newly registered via a bus and the application may detect and use a desired service.

The service layer may include services having various service levels, such as a TV service, a WebOS service, etc. The WebOS service may include a media server, Node.JS, etc. and, in particular, the Node.JS service supports JavaScript, for example.

The WebOS service may be communicated to a Linux process implementing function logic via a bus. This WebOS service is largely divided into four parts, migrates from a TV process and an existing TV to a WebOS, is developed as services which differ between manufacturers, WebOS common services and Javascripts, and is composed of the Node.JS service used via Node.JS.

The application layer may include all applications supportable by a digital device, such as a TV application, a showcase application, a native application, a web application, etc.

Applications on the WebOS may be divided into a web application, a palm development kit (PDK) application, a Qt Meta Language or Qt Modeling Language (QML) application, etc. according to implementation methods.

The web application is based on a WebKit engine and is performed on WAM runtime. Such a web application is based on Enyo framework or may be developed and performed based on general HTML5, cascading style sheets (CSS) and JavaScripts.

The PDK application includes a native application developed with C/C++ based on a PDK provided for a third party or an external developer. The PDK refers to a set of development libraries and tools provided to enable a third party to develop a native application (C/C++) such as games. For example, the PDK application may be used to develop applications requiring high performance.

The QML application is a native application based on Qt and includes basic applications provided along with the WebOS platform, such as card view, home dashboard, virtual keyboard, etc. QML is a markup language of a script format, not C++.

The native application is an application which is developed and compiled using C/C++ and is executed in the binary form and has an advantage such as high execution speed.

FIG. 8 is a diagram illustrating the architecture of a WebOS device according to one embodiment of the present invention.

FIG. 8 is a block diagram based on a runtime of a WebOS device and is described with reference to the layered structure of FIG. 7.

Hereinafter, a description will be given with reference to FIGs. 7 and 8.

Referring to FIG. 8, services, applications and WebOS core modules are included on a system OS (Linux) and system libraries and communication therebetween may be performed via a Luna-service bus.

Node.JS services based on HTML5 such as e-mail, contact or calendar, CSS, Javascript, etc., WebOS services such as logging, backup, file notify, database (DB), activity manager, system policy, audio daemon (AudioD), update, media server, etc., TV services such as electronic program guide (EPG), personal video recorder (PVR), data broadcasting, etc., CP services such as voice recognition, Now on, notification, search, auto content recognition (ACR), contents list browser (CBOX), wfdd, digital media remastering (DMR), remote application, download, Sony Philips digital interface format (SDPIF), etc., native applications such as PDK applications, browsers, QML applications, a UI-related TV applications based on Enyo framework and web applications are processed via WebOS core modules such as the above-described SAM, WAM and LSM via the Luna-service bus. The TV applications and the web applications are not necessarily based on Enyo framework or related to UI.

The CBOX may manage metadata and lists of content of external devices such as USB drivers, DLNA devices or Cloud servers connected to a TV. The CBOX may output content listing of various content containers such as USB, data management system (DMS), DVR, Cloud server, etc. as an integrated view. The CBOX may display various types of content listings such as pictures, music or video and manage metadata thereof. The CBOX may output content of an attached storage in real time. For example, if a storage device such as a USB is plugged in, the CBOX should immediately output a content list of the storage device. At this time, a standardized method for processing the content listing may be defined. The CBOX may accommodate various connection protocols.

The SAM is used to improve module complexity and extensibility. For example, an existing system manager processes several functions such as system UI, window management, web application runtime and UX constraint processing via one process and thus has high implementation complexity. In order to solve such a problem, the SAM divides main functions and clarifies an interface between functions, thereby decreasing implementation complexity.

The LSM is supported to independently develop and integrate a system UX such as card view, launcher, etc. and to easily cope with change in product requirements. The LSM maximally uses hardware resources to enable multitasking if a plurality of application screens is composed using an app-on-app method and may provide a window management mechanism for 21:9 and a multi-window.

The LSM supports implementation of a system UI based on a QML and improves development productivity. QML UX may easily configure a view using a screen layout and UI components based on model view controller (MVC) and easily develop code for processing user input. An interface between the QML and the WebOS component is achieved via a QML extensibility plug-in and graphic operation of an application may be based on Wayland protocol, luna-service call, etc.

The LSM is an abbreviation for a Luna surface manager and functions as an application window compositor.

The LSM composes and outputs independently developed applications, UI components, etc. on a screen. When components such as recent applications, showcase applications or launcher applications render respective content, the LSM defines an output area, a linkage method, etc. as a compositor. The LSM functioning as a compositor performs processing such as graphic composition, focus management, input events, etc. At this time, the LSM receives event, focus, etc. from an input manager, and a remote controller, a HID such as a mouse and keyboard, a joystick, a game pad, a remote application, a pen touch, etc. may be included as an input manager.

The LSM supports multiple window models and may be simultaneously executed in all applications as a system UI. The LSM may support launcher, recents, setting, notification, system keyboard, volume UI, search, finger gesture, voice recognition (speech to text (STT), text to speech (TTS), natural language processing (NLP), etc.), pattern gesture (camera or mobile radio control unit (MRCU)), live menu, ACR, etc.

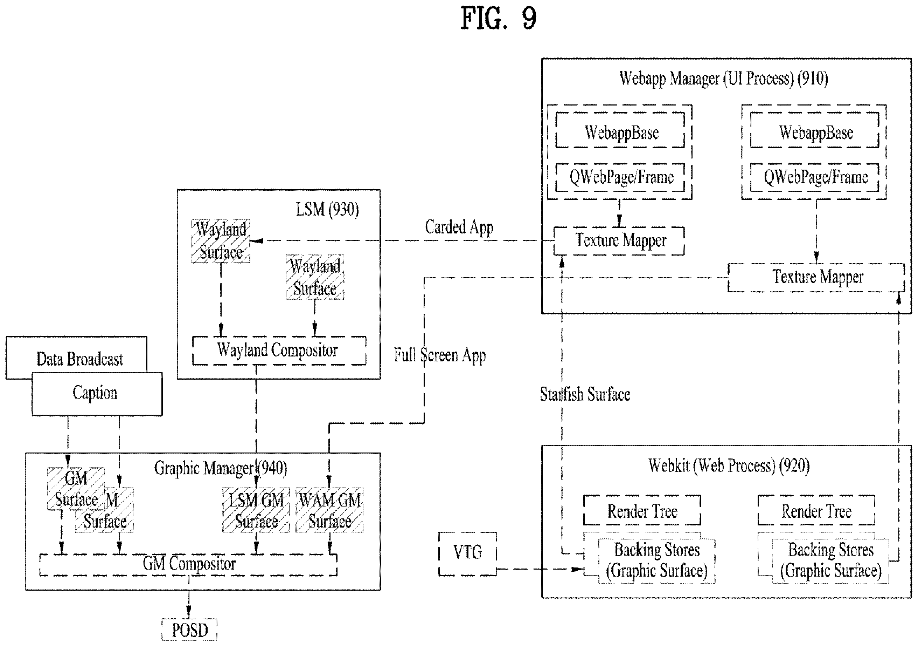

FIG. 9 is a diagram illustrating a graphic composition flow in a WebOS device according to one embodiment of the present invention.

Referring to FIG. 9, graphic composition processing may be performed via a web application manager 910 functioning as a UI process, a WebKit 920 functioning as a web process, an LSM 930 and a graphics manager (GM) 940.

When the web application manager 910 generates web application based graphics data (or application) as a UI process, the generated graphics data is delivered to the LSM if the graphics data is not a fullscreen application. The web application manager 910 receives an application generated by the WebKit 920 in order to share a graphic processing unit (GPU) memory for graphic management between the UI process and the web process and delivers the application to the LSM 930 if the application is not a fullscreen application. If the application is a fullscreen application, the LSM 930 may bypass the application. In this case, the application is directly delivered to the graphics manager 940.

The LSM 930 transmits the received UI application to a Wayland compositor via a Wayland surface and the Wayland compositor appropriately processes the UI application and delivers the processed UI application to the graphics manager. The graphics data received from the LSM 930 is delivered to the graphics manager compositor via the LSM GM surface of the graphics manager 940, for example.

The fullscreen application is directly delivered to the graphics manager 940 without passing through the LSM 930 as described above and is processed in the graphics manager compositor via the WAM GM surface.

The graphics manager processes and outputs all graphics data in the webOS device and receives and outputs data passing through the above-described LSM GM surface, data passing through a WAM GM surface, and graphics data passing through a GM surface, such as a data broadcasting application or a caption application, on a screen. The function of the GM compositor is equal or similar to the above-described compositor.

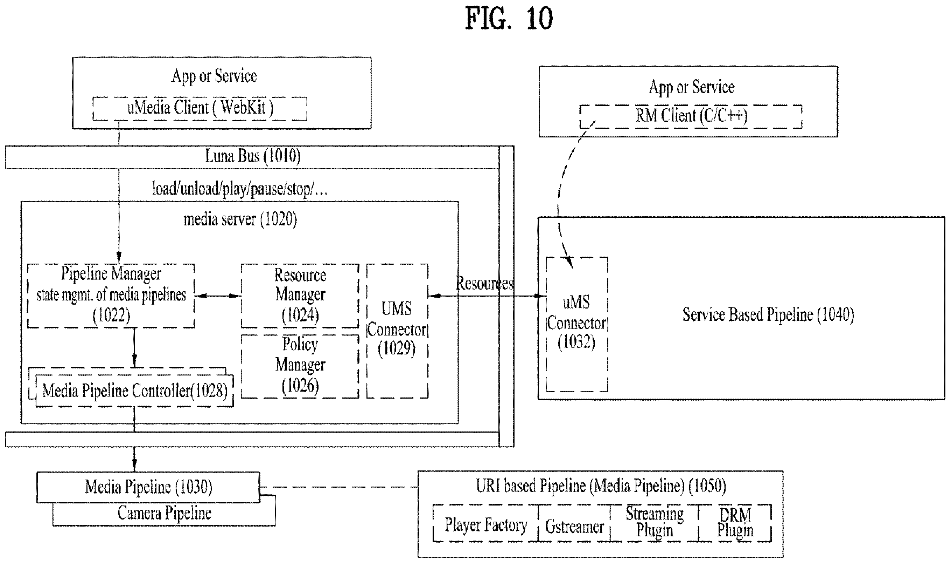

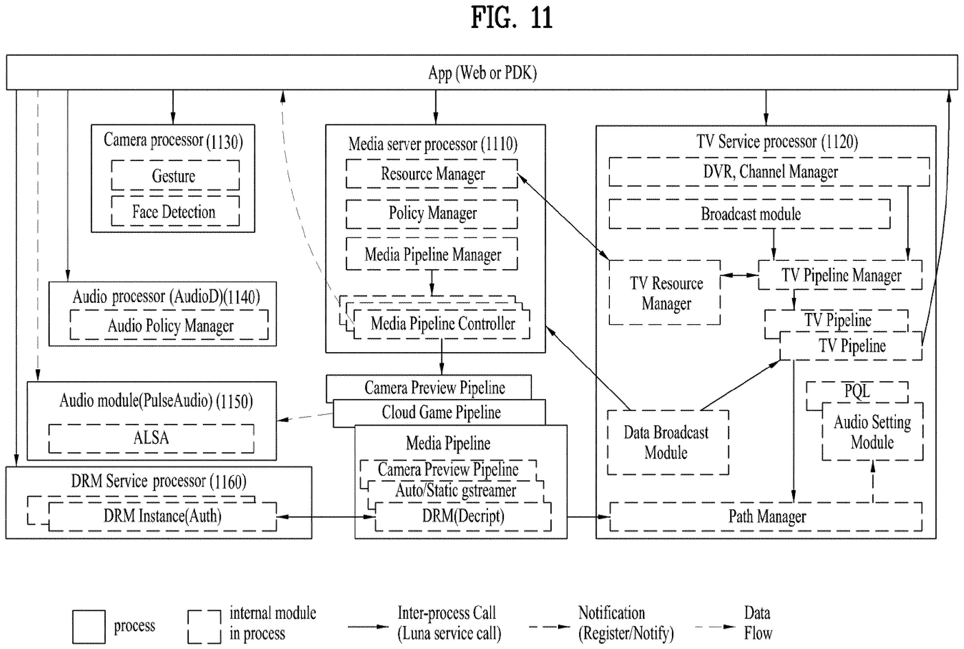

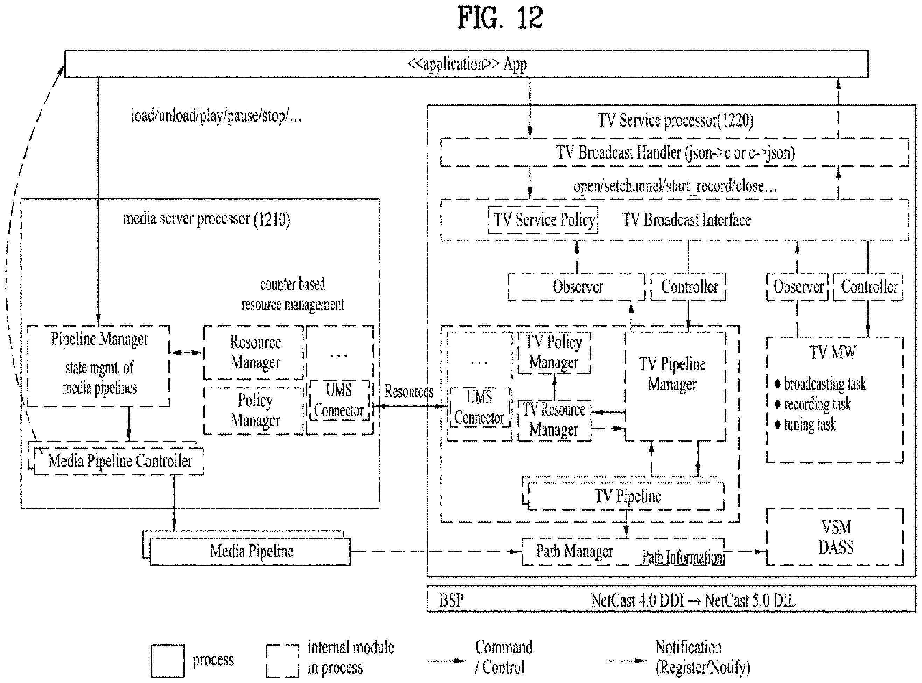

FIG. 10 is a diagram illustrating a media server according to one embodiment of the present invention, FIG. 11 is a block diagram of a media server according to one embodiment of the present invention, and FIG. 12 is a diagram illustrating a relationship between a media server and a TV service according to one embodiment of the present invention.

The media server supports execution of a variety of multimedia in a digital device and manages necessary resources. The media server may efficiently use hardware resources necessary for media play. For example, the media server requires audio/video hardware resources for multimedia execution and efficiently manages a resource use status to efficiently use resources. In general, a stationary device having a screen larger than that of a mobile device requires more hardware resources upon multimedia execution and requires high encoding/decoding rate and graphics data transfer rate due to a large amount of data. The media server should perform not only streaming or file playback but also broadcasting, recording and tuning tasks, a task for simultaneously viewing and recording, and a task for simultaneous displaying a sender and a recipient on a screen upon video call. It is difficult for the media server to simultaneously perform several tasks due to restriction in hardware resources such as an encoder, a decoder, a tuner, a display engine, etc. in chipset units. For example, the media server restricts a use scenario or performs processing using user input.

The media server may make system stability robust, and may remove a playback pipeline, in which errors occur during media playback, per pipeline, such that other media play is not influenced even when errors occur. Such a pipeline is a chain for connecting unit functions such as decoding, analysis, output, etc. upon a media playback request, and required unit functions may be changed according to media type, etc.

The media server may have extensibility and may add a new type of pipeline without influencing an existing implementation method. For example, the media server may accommodate a camera pipeline, a video conference (Skype) pipeline, a third-party pipeline, etc.

The media server may process general media playback and TV task execution as separate services because the interface of the TV service is different from that of media playback. The media server supports operation such as "setchannel", "channelup", "channeldown", "channeltuning" and "recordstart" in relation to the TV service and support operation such as "play", "pause" and "stop" in relation to general media playback, that is, supports different operations with respect to the TV service and general media playback and processes the TV service and media playback as separate services.

The media server may control or manage a resource management function. Hardware resource assignment or recovery in a device is conducted by the media server. In particular, the TV service process delivers a task which is being executed and a resource assignment status to the media server. The media server secures resources to execute a pipeline whenever media is executed, allows media execution due to priority (e.g., policy) upon media execution request, and performs resource recovery of another pipeline, based on a resource status of each pipeline. The predefined execution priority and resource information necessary for a specific request are managed by a policy manager and the resource manager communicates with the policy manager to process resource assignment and recovery.

The media server may have identifiers (IDs) for all operations related to playback. For example, the media server may send a command to a specific pipeline based on the ID. The media server may send respective commands to pipelines for playback of two or more media.

The media server is responsible for playing back a HTML5 standard media.

The media server performs a service process of a TV pipeline according to a TV restructuralization range. The media server may be designed and implemented regardless of the TV restructuralization range. If the separate service process of the TV is not performed, the TV may be wholly re-executed when errors occurs in a specific task.

The media server is also referred to as uMS, that is, a micro media server. The media player is a media client and means WebKit for HTML5 video tag, camera, TV, Skype or second screen, for example.

The media server mainly manages micro resources such as a resource manager or a policy manager. The media server also controls playback of web standard media content. The media server may manage pipeline controller resources.

The media server supports extensibility, reliability, efficient resource usage, etc., for example.

In other words, the uMS, that is, the micro media server, manages and controls resource usage for appropriate processing within the WebOS device, such as resources such as cloud game, MVPD (pay service, etc.), camera preview, second screen or Skype, and TV resources. A pipeline is used upon usage of each resource, for example, and the media server may manage and control generation, deletion, use of a pipeline for resource management.

The pipeline may be generated when a media related to a task starts a sequence of request, decoding streaming and parsing such as video output. For example, in association with a TV service and an application, watching, recording, channel tuning, etc. are controlled and performed via pipelines individually generated according to requests thereof with respect to resource usage.

Referring to FIG. 10, a processing structure of a media server will be described in detail.

In FIG. 10, an application or service is connected to a media server 1020 via a Luna-service bus 1010 and the media server 1020 is connected to and managed by pipelines generated via the Luna-service bus 1010.

The application or service includes various clients according to properties thereof and may exchange data with the media server 1020 or the pipeline via the clients.

The clients include a uMedia client (WebKit) for connection with the media server 1020 and a resource manager (RM) client (C/C++), for example.

The application including the uMedia client is connected to the media server 1020 as described above. More specifically, the uMedia client corresponds to the below-described video object, for example, and uses the media server 1020, for video operation by a request, etc.

The video operation relates to a video status and may include all status data related to the video operation, such as loading, unloading, play (playback or reproduction), pause, stop, etc. Such video operations or statuses may be processed by generating individual pipelines. Accordingly, the uMedia client transmits status data related to the video operation to the pipeline manager 1022 in the media server.

The media server 1022 acquires information about resources of the current device via data communication with the resource manager 1024 and requests assignment of resources corresponding to the status data of the uMedia client. At this time, the pipeline manager 1022 or the resource manager 1024 controls resource assignment via data communication with the policy manager 1026 if necessary. For example, if resources to be assigned according to the request of the pipeline manager 1022 are not present or are lacking in the resource manager 1024, resource assignment may be appropriately performed according to priority comparison of the policy manager 1026.

The pipeline manager 1022 requests to generate a pipeline for operation according to the request of the uMedia client from the media pipeline controller 102, with respect to resources assigned according to resource assignment of the resource manager 1024.

The media pipeline controller 1028 generates a necessary pipeline under control of the pipeline manager 1022. As shown, a media pipeline, a camera pipeline, a pipeline related to playback, pause or stop may be generated. The pipeline includes pipelines for HTML5, web CP, Smarthshare playback, thumbnail extraction, NDK, cinema, multimedia and hypermedia information coding experts group (MHEG), etc.

The pipeline may include a service-based pipeline and a URI based pipeline (media pipeline), for example.

Referring to FIG. 10, the application or service including the RM client may not be directly connected to the media server 1020, because the application or service can directly process a media. In other words, if the application or service directly processes a media, the media server may not be used. At this time, for pipeline generation and usage, resource management is necessary and, at this time, a uMS connector is used. When a resource management request for direct media processing of the application or service is received, the uMS connector communicates with the media server 1020 including the resource manager 1024. The media server 1020 also includes a uMS connector.

Accordingly, the application or service may cope with the request of the RM client via resource management of the resource manager 1024 via the uMS connector. The RM client may process services such as native CP, TV service, second screen, flash player, You Tube media source extensions (MSE), cloud game, Skype, etc. In this case, as described above, the resource manager 1024 may manage resources via appropriate data communication with the policy manager 1026 if necessary for resource management.

The URI based pipeline does not directly process the media unlike the above-RM client but processes the media via the media server 1020. The URI based pipeline may include player factory, Gstreamer, streaming plug-in, digital rights management (DRM) plug-in pipelines.

An interface method between the application and the media services is as follows.

An interface method using a service in a web application may be used. In this method, a Luna call method using a palm service bridge (PSB) and a method of using Cordova may be used, in which a display is extended to a video tag. In addition, a method of using HTML5 standard related to a video tag or media element may be used.

A method of using a service in PDK may be used.

Alternatively, a method of using in existing CP may be used. For backward compatibility, plug-in of an existing platform may be extended and used based on Luna.

Lastly, an interface method using a non-WebOS may be used. In this case, a Luna bus may be directly called to perform interfacing.

Seamless change is processed by a separate module (e.g., TVwin) and refers to a process of first displaying a TV program on a screen without a WebOS before or duration WebOS booting and then performing seamless processing. This is used for the purpose of first providing a basic function of a TV service, for fast response to a power-on request of a user, because a booting time of a WebOS is late. The module is a part of a TV service process and supports seamless change for providing fast booting and a basic TV function, factory mode, etc. The module is responsible for switching from the non-WebOS mode to the WebOS mode.

FIG. 11 shows the processing structure of the media server.

In FIG. 11, a solid box denotes a process component and a dotted box denotes an internal processing module of the process. A solid arrow denotes an interprocess call, that is, a Luna-service call and a dotted arrow denotes notification such as register/notify or data flow.

The service, the web application or the PDK application (hereinafter, referred to as "application") is connected to various service processing components via a Luna-service bus and is operated or controlled via the service processing components.

A data processing path is changed according to application type. For example, if the application includes image data related to a camera sensor, the image data is transmitted to and processed by a camera processor 1130. At this time, the camera processor 1130 includes a gesture or face detection module and processes image data of the received application. The camera processor 1130 may generate a pipeline via a media server processor 1110 with respect to data which requires use of a pipeline according to user selection or automatically and process the data.

Alternatively, if the application includes audio data, the audio may be processed via an audio processor (AudioD) 1140 and an audio module (PulseAudio) 1150. For example, the audio processor 1140 processes the audio data received from the application and transmits the processed audio data to the audio module 1150. At this time, the audio processor 1140 may include an audio policy manager to determine processing of the audio data. The processed audio data is processed by the audio module 1150. The application or a pipeline related thereto may notify the audio module 1150 of data related to audio data processing. The audio module 1150 includes advanced Linux sound architecture (ALSA).

Alternatively, if the application includes or processes (hereinafter, referred to as "includes") content subjected to DRM, the content data is transmitted to a DRM service processor 1160 and the DRM service processor 1160 generates a DRM instance and processes the content data subjected to DRM. The DRM service processor 1160 is connected to a DRM pipeline in a media pipeline via a Luna-service bus, for processing of the content data subjected to DRM.

Hereinafter, processing of an application including media data or TV service data (e.g., broadcast data) will be described.

FIG. 12 shows the media server processor and the TV service processor of FIG. 11 in detail.

Accordingly, a description will be given with reference to FIGs. 11 and 12.

First, if the application includes TV service data, the application is processed by the TV service processor 1120/1220.

The TV service processor 1120 includes at least one of a DVR/channel manager, a broadcast module, a TV pipeline manager, a TV resource manager, a data broadcast module, an audio setting module, a path manager, etc., for example. In FIG. 12, the TV service processor 1220 may include a TV broadcast handler, a TV broadcast interface, a service processor, TV middleware (MW), a path manager and a BSP (NetCast). The service processor may mean a module including a TV pipeline manager, a TV resource manager, a TV policy manager, a USM connector, etc., for example.

In the present specification, the TV service processor may have the configuration of FIG. 11 or FIG. 12 or a combination thereof. Some components may be omitted or other components (not shown) may be added.

The TV service processor 1120/1220 transmits DVR or channel related data to a DVR/channel manager and transmits the DVR or channel related data to the TV pipeline manager to generate and process a TV pipeline, based on attribute or type of the TV service data received from the application. If the attribute or type of the TV service data is broadcast content data, the TV service processor 1120 generates and processes a TV pipeline via the TV pipeline manager, for processing of the data via a broadcast module.

Alternatively, a JavaScript standard object notation (json) file or a file written in c is processed by the TV broadcast handler and transmitted to the TV pipeline manager via a TV broadcast interface to generate and process a TV pipeline. In this case, the TV broadcast interface may transmit the data or file passing through the TV broadcast handler to the TV pipeline manager based on TV service policy and refer to the data or file upon generating a pipeline.

The TV pipeline manager generates one or more pipelines according to a request for generation of a TV pipeline from the processing module or manager of the TV service processor, under control of the TV resource manager. The TV resource manager may be controlled by the TV policy manager, in order to request a resource assignment status for a TV service according to a request for generation of a TV pipeline of the TV pipeline manager, and may perform data communication with the media server processor 1110/1210 via a uMS connector. The resource manager in the media server processor 1110/1210 sends the resource assignment status for the TV service according to the request of the TV resource manager. For example, if the resource manager in the media server processor 1110/1210 determines that the resources for the TV service are already assigned, the TV resource manager may be notified that assignment of all resources is completed. At this time, the resource manager in the media server processor may remove a predetermined TV pipeline according to a predetermined criterion or priority of TV pipelines already assigned for the TV service along with notification and request generation of a TV pipeline for the requested TV service. Alternatively, the TV resource manager may appropriately remove a TV pipeline or may add or newly establish a TV pipeline according to a status report of the resource manager in the media server processor 1110/1210.

The BSP supports backward compatibility with an existing digital device.

The generated TV pipelines may appropriately operate under control of the path manager in the processing procedure. The path manager may determine or control the processing path or procedure of the pipelines in consideration of the TV pipeline in the processing procedure and the operation of the pipelines generated by the media server processor 1110/1210.

Next, if the application includes media data, not TV service data, the application is processed by the media server processor 1110/1210. The media server processor 1110/1210 includes a resource manager, a policy manager, a media pipeline manager, a media pipeline controller, etc. As pipelines generated under control of the media pipeline manager and the media pipeline controller, a camera preview pipeline, a cloud game pipeline, a media pipeline, etc. may be generated. The media pipeline may include streaming protocol, auto/static gstreamer, DRM, etc. and the processing flow thereof may be determined under control of the path manager. For a detailed description of the processing procedure of the media server processor 1110/1210, refer to the description of FIG. 10 and a repeated description will be omitted. In the present specification, the resource manager in the media server processor 1110/1210 may perform resource management to a counter base, for example.

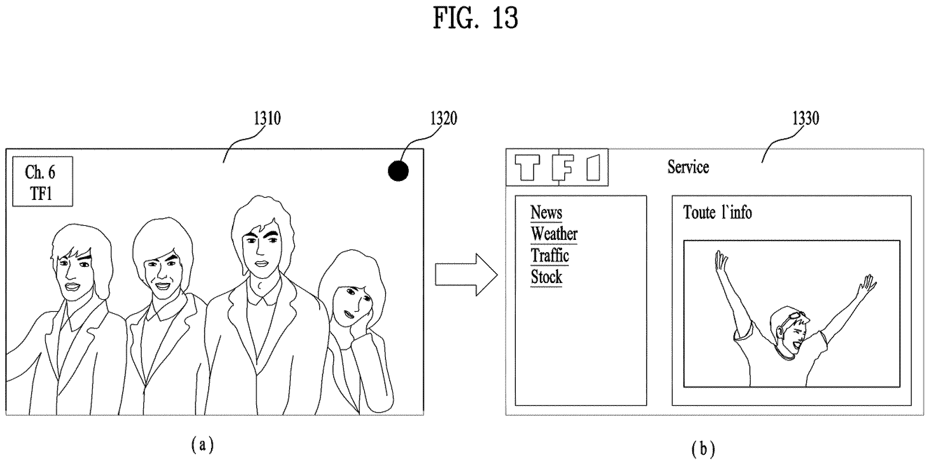

Hereinafter, the exemplary embodiments of the present invention will be described in detail with reference to FIG. 13 to FIG. 31. In describing and understanding the exemplary embodiments of the present invention, reference may also be made to the detailed description of FIG. 1 to FIG. 12, which is provided above. Additionally, the above-described display device or digital device may correspond to the exemplary embodiment of the present invention.

The concept of the digital device being described in this specification may, for example, include a TV, a smart TV, a Hybrid Broadcast Broadband Television (HBBTV), a network TV, a web TV, an Internet Protocol Television (IPTV), a personal computer (PC), a tablet PC, a notebook computer (or laptop computer), a netbook, a PMP, a smart phone, a smart watch, smart glasses, a navigation system (or navigator), and so on.

Additionally, in this specification, as a signaling method notifying the presence or absence of a data broadcasting service, among data broadcasting standards, a method of using an Application Information Table (AIT) will be mainly described. The AIT may correspond to a Section AIT being carried over a broadcast signal or a XML AIT being transmitted based upon a network. Accordingly, the data broadcasting standard that is related to the present invention may correspond to HbbTV, MHP, Hybridcast, Ginga, and so on.

Meanwhile, in case of OHTV, since the system of an application that is being serviced, even if the signaling is not performed through the AIT, may have a similar configuration as the AIT, and since a rule for configuring a link indicating a position (or location) of application data has the characteristic of referring to a channel name, it will be understood that the OHTV is included in the scope of the exemplary embodiment of the present invention.

Additionally, in this specification, an application is in correspondence with a data broadcasting service, and, herein, the terms application and service may be used alternately. According to the exemplary embodiment, the term application may be used as a collective concept referring to a data broadcast service itself, wherein the data broadcast service is being provided through a specific channel, and, in case the data broadcasting service being related to a specific channel includes diverse types of lower layer services (e.g., weather forecast service, news service, and so on), the term application may refer to each of the lower layer services.

FIG. 13 illustrates an exemplary method for using data broadcasting in a general multimedia device.

Referring to (a) of FIG. 13, a display screen 1310 configured to output video data, which are included in a broadcast signal of a specific channel, is shown. In case data broadcasting is included in the broadcast signal, an indicator 1320 configured to notify the presence of data broadcasting related to the specific channel may be displayed on the display screen 1310.

A procedure for processing a service of data broadcasting being included in a broadcast signal in a general multimedia device will hereinafter be described in detail. The multimedia device demultiplexes a received broadcast signal to video data, audio data, and signaling information, and, then, the multimedia device verifies whether or not an AIT for data broadcasting exists in the signaling information. For example, the multimedia device acquires a PID of a Program Map Table (PMT) by parsing a Program Association Table (PAT), which is included in the signaling information. Subsequently, the multimedia device acquires position information (or location information) of the AIT by parsing the PMT by using the acquired PID. Thereafter, by parsing the AIT by using the acquired position information of the corresponding AIT, the multimedia device may acquire information on the data broadcasting service being related to a specific channel, *i.e.,* information on an application related to the specific channel. Based upon the acquired information on the application, the multimedia device may verify a name and content of the application that is being provided, a position (or location) of a data file of the corresponding application, and so on.

For example, when the user pushes (or presses on) a button having a same color as the indicator 1320, the button being provided on a remote controller, as shown in (b) of FIG. 13, an application that is related to the specific channel is executed, and a respective execution screen 1330 may be displayed.

However, when using a general multimedia device, there lies a problem in that the process of verifying the presence or absence of a data broadcasting service being related to the specific channel and verifying the contents of the corresponding service may only be performed after entering the specific channel. The object of the exemplary embodiments of the present invention that will hereinafter be described in detail is to resolve the problem of such limited access to a data broadcasting service.

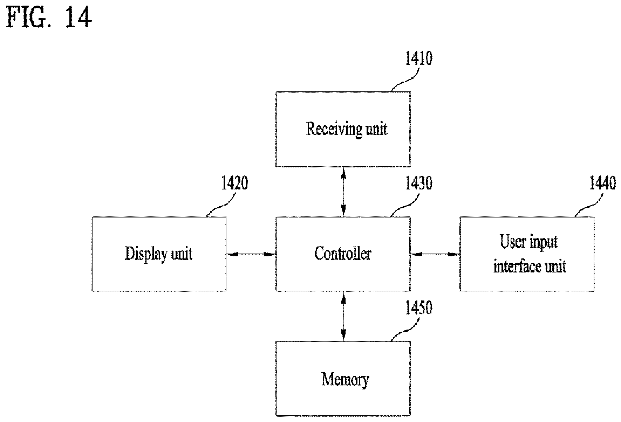

FIG. 14 illustrates a detailed block view showing a configuration module of a multimedia device according to an exemplary embodiment of the present invention. Referring to the above-described FIG. 1 to FIG. 12, some of the configuration modules of the multimedia device of FIG. 14 may be added or modified (or varied), and the scope of the present invention will not be decided only by the elements described in the drawings, and, by principle, the scope of the present invention should be interpreted based upon the appended claims of the present invention.

The multimedia device according to the exemplary embodiment of the present invention may include a receiving unit 1410, a display unit 1420, a controller 1430, a user input interface unit 1440, a memory 1450, and so on.

The receiving unit 1410 may receive a broadcast signal, content, and so on, including broadcast program data from a broadcasting station or content provider (CP), and the receiving unit 1410 may also receive a service, application, content, and so on, from an external server through a network. The receiving unit 1410 may be realized of at least one of the network interface unit 201 shown in FIG. 2, the radio communication unit 310 shown in FIG. 3, and the receiving unit 405 shown in FIG. 4.

The display unit 1420 may display video data, graphic data, image data, and so on, corresponding to the received content. Additionally, the display unit 1420 may also display video data, graphic data, and image data, which are pre-stored in the memory 1450. The display unit 1420 may be realized of at least one of the display unit 208 shown in FIG. 2, the display unit 351 shown in FIG. 3, and the display unit 480 shown in FIG. 4.

The user input interface unit 1440 may receive a specific command from the user. The user input interface unit 1440 may receive a control signal, which is configured to control the multimedia device, from the above-described remote controlling devices 610, 620, and 630. And, in case the display unit 1420 is configured to include a touch screen, the user input interface unit 1440 may receive a control signal, which is configured to control the multimedia device, from the touch screen. The user input interface unit 1440 may be realized of at least one of the UI manager 214 shown in FIG. 2, the user input unit 330 shown in FIG. 3, and the user interface unit 450 shown in FIG. 4.

The memory 1450 may store diverse programs, applications, algorithms, and so on, which are required for operating the multimedia device. The memory 1450 may store content, program, data, application, and so on, which are received from the receiving unit 1410. The memory 1450 may be realized of at least one of the SI & metadata database 211 shown in FIG. 2, the memory 360 shown in FIG. 3, and the storage unit 440 shown in FIG. 4.

The controller 1430 may control the operations of the multimedia device and may perform an overall management of the functions of the receiving unit 1410, the display unit 1420, the user input interface unit 1440, and the memory 1450. The controller 1430 may include a decoder, which is configured to process the video data and the audio data of the content received from the receiving unit 1410. According to the exemplary embodiment, the controller 1430 may also include multiple video decoders, and, among the multiple video decoders, one video decoder may correspond to a hardware decoder or may correspond to a software decoder. Depending upon the specification (or quality) of the multimedia device, the video decoder being included in the controller 1430 may process video data having a maximum 4K-level resolution (e.g., 4,096*2,096), and the video decoder may also process video data having a higher resolution or video data having a lower resolution.

The controller 1430 may be realized of at least one of the TCP/IP manager 201, the service delivery manager 203, the SI decoder 204, the demux 205, the audio decoder 206, the video decoder 207, the service control manager 209, the service discovery manager 210, and the service manager 213 shown in FIG. 2, the controller 380 shown in FIG. 3, the controller 470 shown in FIG. 4, the media server 1020 shown in FIG. 10, the media server processing unit 1110 and the TV service processing unit 1120 shown in FIG. 11, and the media server processing unit 1210 and the TV service processing unit 1220 shown in FIG. 12.

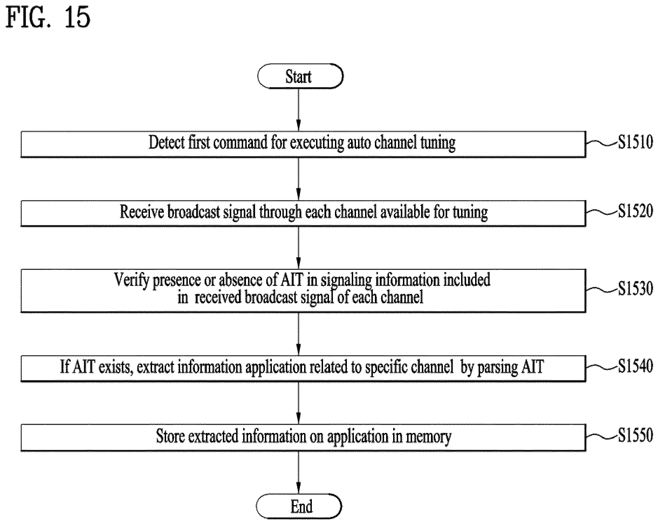

Each of the configuration modules included in the multimedia device shown in FIG. 14 will hereinafter be described in more detail in relation to the exemplary embodiment of the present invention with reference to FIG. 14 and FIG. 15.

FIG. 15 illustrates a flow chart showing an exemplary method for generating a list of applications being related to data broadcasting in a multimedia device according to an exemplary embodiment of the present invention.

The controller 1430 of the multimedia device detects a first command, which is configured to execute auto channel tuning (S1510). Herein, auto channel tuning refers to a process of serially tuning each channel in the receiving unit 1410. Such auto channel tuning may be performed at a set-up step of the multimedia device and may also be performed by a user's selection during the usage of them multimedia device. In case of the latter, the controller 1430 may control the user input interface unit 1440, so that the first command being transmitted from the remote controller can be received.

The controller 1430 controls the receiving unit 1410, so that the receiving unit can receive a broadcast signal through each of the channels available for tuning (S1510). If auto channel tuning is executed, in accordance with the control of the controller 1430, the receiving unit 1410 may tune to a specific channel and receive its broadcast signal, and, then, the receiving unit 1410 may tune to a next channel and receive its broadcast signal. Among the channel that can be tuned to by the receiving unit 1410, the specific channel may correspond to a first channel, or the specific channel may correspond to a next channel of the channel to which the receiving unit 1410 is currently tuned. For example, if the receiving unit tunes to a specific frequency being set as an initiating (or starting) frequency, and if a broadcast signal is not received through the tuned frequency, the receiving unit 1410 may perform auto channel tuning by using a method of sequentially increasing the frequency and determining whether or not a broadcast signal is being received through the corresponding frequency.

The controller 1430 verifies the presence or absence of an AIT within the signaling information, which is included in the broadcast signals received from each channel (S1530). The controller 1430 separates (or divides) signaling information from the broadcast signals of each channel, and, then, the controller 1430 may verify the presence or absence of the AIT by parsing a PMT from the separated signaling information. The controller 1430 may determine a channel corresponding to the signaling information including AIT as the channel, which provides the data broadcasting service. At least a part of step S1510 may chronologically overlap with step S1530 and may be performed accordingly.

In case an AIT is included (or exists) in the signaling information included in a broadcast signal of a specific channel, the controller 1430 extracts information on an application being related to the specific channel by parsing the AIT (S1540). Herein, the application being related to a specific channel refers to an application that is related to a data broadcasting service, which is being provided through a specific channel, and the application being related to a specific channel may signify a channel-bound application, a program-bound application, a content-bound application, and so on. Nevertheless, the fact that the application is related to a specific channel does not signify that the corresponding application provides only content or service being related to the specific channel. Additionally, information on an application being related to a specific channel may include at least one of information on a name of the application, information on an attribute of the application, information on a version of the application, information on a type of the application, information on a position (or location) of a data file of the application, and information on channel-bounding of the application.

The controller 1430 stores the extracted information on the application in the memory 1450 (S1550). Among the extracted information on the application, the controller 1430 may store only a portion of the extracted information in the memory 1450. Additionally, the controller 1430 may map the extracted information on the application to the information on the related channel and may then store the mapped result in the memory 1450. Moreover, the controller 1430 may also generate a list of applications being related to data broadcasting based upon the information stored in the memory 1450. At least a part of any one of step S1520 to step S1540 may chronologically overlap with step S1550 and may be performed accordingly. In this specification, in case the extracted information on the application is stored in the memory 1450 in the form of a list of applications, the information on the application and the list of applications, which are stored in the memory 1450, may be used in combination.

According to the exemplary embodiment, when auto channel tuning is being performed, since the information on the corresponding application may be determined in advance by parsing the AIT existing in the signaling information, even if the user does not shift to a specific channel, it will be advantageous in that the presence or absence of available applications and the related information may be provided to the user. In the related are, when auto channel tuning is performed, only Network Information Table (NIT), Program Association Table (PAT), Program Map Table (PMT), and Service Description Table (SDT) were parsed from the signaling information. However, according to the exemplary embodiment of the present invention, a list of applications being related to data broadcasting may be determined in advance by parsing up to the AIT.

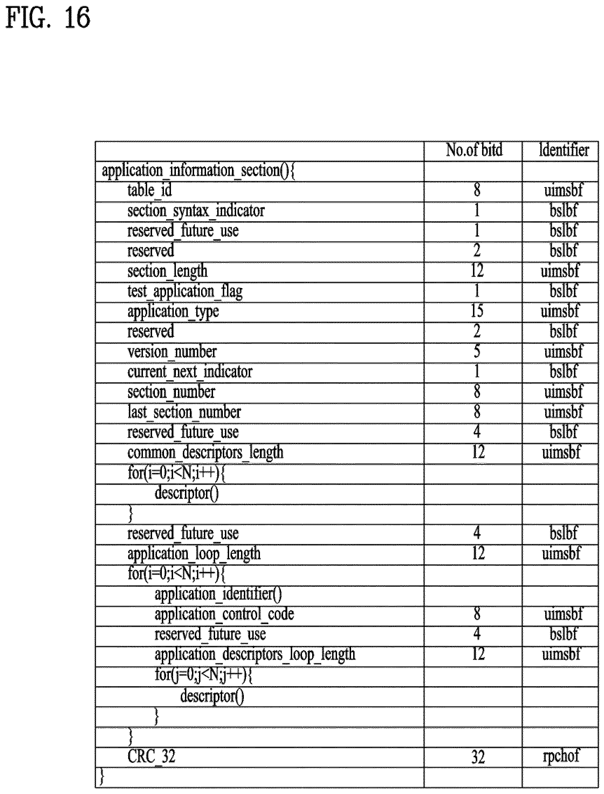

FIG. 16 illustrates a syntax structure of an AIT, which may be included in signaling information of a broadcast signal.

One AIT included in the signaling information may be transmitted for each service of the data broadcasting (*i.e.,* for each data broadcasting service), and the AIT carries information on all of the applications that are available in the corresponding service. A common descriptor loop, which is included in the AIT, includes a loop that is commonly applied to all applications. And, an application descriptor loop includes a descriptor that is being applied to each application. Furthermore, each application may be uniquely identified by an application identifier.

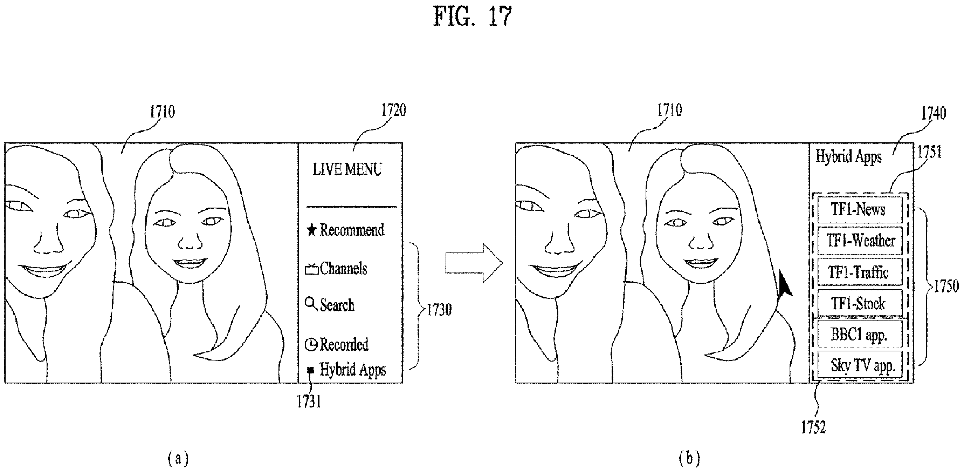

FIG. 17 illustrates an exemplary method for providing a list of applications in a multimedia device according to an exemplary embodiment of the present invention.

Referring to (a) of FIG. 17, the controller 1430 controls the receiving unit 1410, so that the receiving unit 1410 can receive a broadcast signal respective to a specific channel, in case the specific channel is selected by the user, and, then, the controller 1430 outputs video data 1710 included in the received broadcast signal to the display unit 1420. Although an example of video data 1710 being included in the received broadcast signal of the specific channel is shown and described in (a) of FIG. 17, video data, graphic data, image data, a Home screen, and so on, of another content may also be displayed on the display screen of the display unit 1420.

Subsequently, when the controller detects a command for selecting a predetermined menu by using remote controlling devices 610, 620, and 630, the controller 1430 may output a menu bar 1720 over the video data 1710. For example, the menu bar 1720 may be configured to allow the user to quickly access a specific function among a plurality of functions of the multimedia device. The menu bar 1720 includes a list 1730 of the specific functions, and an item 1731 configured to verify the list of applications being related to data broadcasting may be exist in the list 1730. Although the information related to the application, which is related to data broadcasting, is carried over the broadcast signal, since the actual data of the application may be transmitted through the network, the list of applications being related to data broadcasting may also be referred to as a hybrid app list.

When the controller 1430 detects a command for selecting the item 1731, which is configured to verify the list of applications being related to data broadcasting, by using the remote controlling devices 610, 620, and 630, the controller 1430 may output a menu bar 1740 including the list (hereinafter referred to as "application list") 1750 of applications being related to data broadcasting over the video data 1710, as shown in (b) of FIG. 17.

Regardless of the specific channel that transmits the video data 1710, the application list 1750 may include applications being related to data broadcasting of each of the channels, which are determined by the auto channel tuning process.

According to the exemplary embodiment, among the applications being related to data broadcasting of each of the channels, which are determined by the auto channel tuning process, the application list 1750 may be configured by using applications recently used by the user or by using applications frequently used by the user, and the application list 1750 may be configured so that the applications recently used by the user or the applications frequently used by the user can be positioned at a center of the list.

According to the exemplary embodiment, in case of an application 1751 that is capable of knowing metadata from the information determined by the auto channel tuning process or by using the information is determined by the auto channel tuning process, channel information and application content information (e.g., TF1-News) may be collectively included in the application list 1750, and, in case of an application 1752 that is not capable of knowing the metadata, such as MHEG, a name of the application is generated (or created) (*e.g.,* BBC1 app.) in accordance with the channel information and may then be included in the application list 1750.

By selecting any one of the applications included in the application list 1750 by using the remote controlling devices 610, 620, and 630, the user may use the corresponding application.

In this embodiment, although the description is given under the assumption that the menu bar 1720 is displayed first and that the other menu bar 1740 is displayed afterwards, depending upon the exemplary embodiment, the other menu bar 1740 may be directly displayed on the display unit 1420.

According to this exemplary embodiment, by viewing (or considering) the applications being related to data broadcasting as independent applications instead of subordinating the applications to each channel, information of the applications may be provided to the user regardless of each of the respective channels.

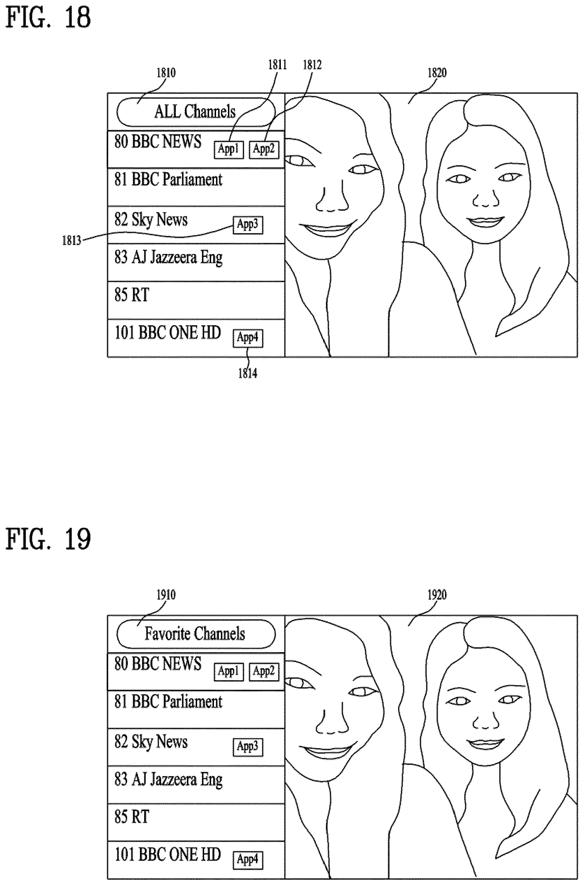

FIG. 18 illustrates another exemplary method for providing a list of applications in a multimedia device according to an exemplary embodiment of the present invention.

The controller 1430 outputs a channel list 1810 to the display unit 1420 in accordance with a command requesting for a channel list. The channel list 1810 may include all of the channels that are available for tuning by the receiving unit 1410. According to the exemplary embodiment, the channel list 1810 may be outputted to one (or a same) display screen along with video data 1820 respective to a channel to which the receiving unit 1410 is currently tuned.

Based upon the information on the application, which is extracted by the auto channel tuning process, the controller 1430 may include menu icons 1811 to 1814 of the applications respective to each channel in the channel list 1810. For example, in the channel list 1810, the menu icons 1811 to 1814 of the applications respective to each channel providing data broadcasting may be display in correspondence with the respective channel. For example, in case two applications being related to data broadcasting (Application 1 and Application 2) are provided through BBC Channel No. 80, a first menu icon 1811 being related to Application 1 and a second menu icon 1812 being related to Application 2 may be displayed in the channel list 1810 in correspondence with BBC Channel No. 80.

By selecting any one of the menu icons 1811 to 1814 of the applications respective to each channel by using the remote controlling devices 610, 620, and 630, the user may use the corresponding application.

FIG. 19 illustrates yet another exemplary method for providing a list of applications in a multimedia device according to an exemplary embodiment of the present invention. In relation to FIG. 18, overlapping description of the features that have already been described above will not be provided for simplicity. And, therefore, the difference between the example of FIG. 18 and the example of FIG. 19 will hereinafter be mostly described in detail.

In accordance with a command requesting for a channel list, the controller 1430 outputs a channel list 1910 on the display unit 1420. And, according to the exemplary embodiment, the channel list 1910 may be outputted to one (or a same) display screen along with video data 1920 respective to a channel to which the receiving unit 1410 is currently tuned.

The difference between the channel list 1910 of FIG. 19 and the channel list of FIG. 18 is that, instead of including all channels available for tuning by the receiving unit 1410, among all of the channels available for tuning by the receiving unit 1410, a channel registered by the user as a favorite channel, a channel recently viewed by the user, or a channel frequently viewed by the user may be included in the channel list 1910 of FIG. 19.

Apart from this, since the remaining features are similar to those described in FIG. 18, detailed description of the same will be omitted for simplicity.

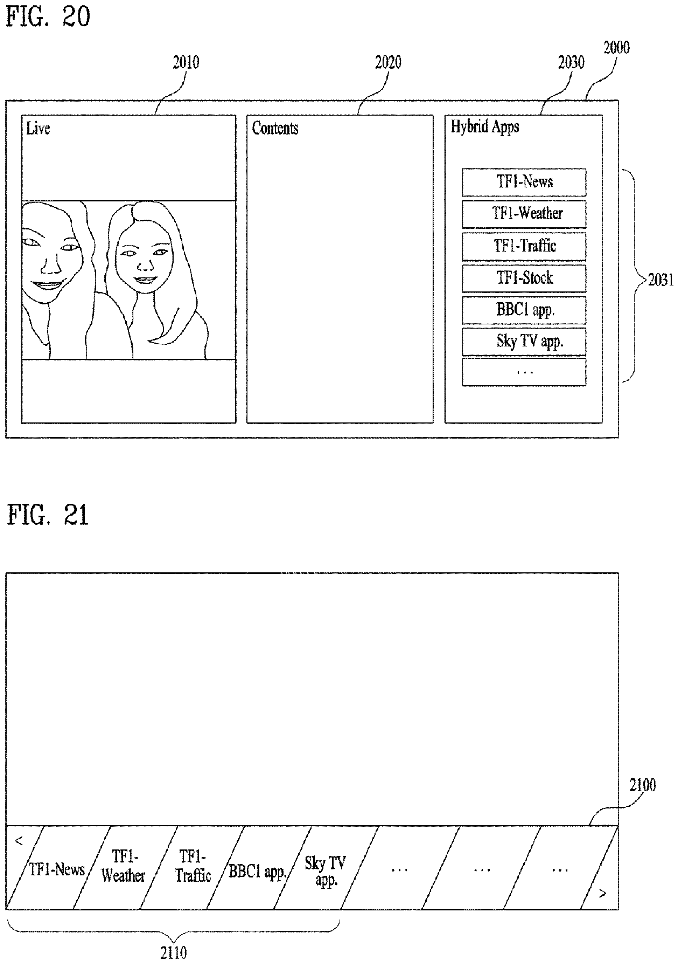

FIG. 20 illustrates yet another exemplary method for providing a list of applications in a multimedia device according to an exemplary embodiment of the present invention.

Referring to FIG. 20, a predetermined Home screen 2000 is displayed on the display unit 1420. According to this exemplary embodiment, a list of applications being related to data broadcasting may be displayed on the Home screen 2000. For example, the Home screen 2000 may include a first section 2010 configured to output a live broadcast signal, a second section 2020 configured to output information related to a predetermined content, which may be used through the multimedia device, and a third section 2030 configured to include an application list 2031 listing applications related to data broadcasting. Since the application list 2031 is similar to the application list 1750 described above with reference to (b) of FIG. 17, detailed description of the same will be omitted for simplicity.

According to the exemplary embodiment, by viewing (or considering) the applications being related to data broadcasting as independent applications instead of subordinating the applications to each channel, information of the applications may be provided to the user regardless of each of the respective channels.

FIG. 21 illustrates yet another exemplary method for providing a list of applications in a multimedia device according to an exemplary embodiment of the present invention.

Referring to FIG. 21, an application list 2110 listing applications related to data broadcasting may be included in a launcher bar 2100. For example, during the usage of the multimedia device, by having the user select a specific menu displayed on the display screen of the display unit 1430 by pressing on a specific button, which is provided on the remote controlling devices 610, 620, and 630, or by using the remote controlling devices 610, 620, and 630, the launcher bar 2100 may be displayed on the display unit 1420.

By selecting a specific application included in the application list 2110, which is included in the launcher bar 2100, by using the remote controlling devices 610, 620, and 630, the user may use the corresponding application.

Since the application list 2110 is similar to the application list 1750 described above with reference to (b) of FIG. 17, detailed description of the same will be omitted for simplicity.

According to the exemplary embodiment, by viewing (or considering) the applications being related to data broadcasting as independent applications instead of subordinating the applications to each channel, information of the applications may be provided to the user regardless of each of the respective channels.

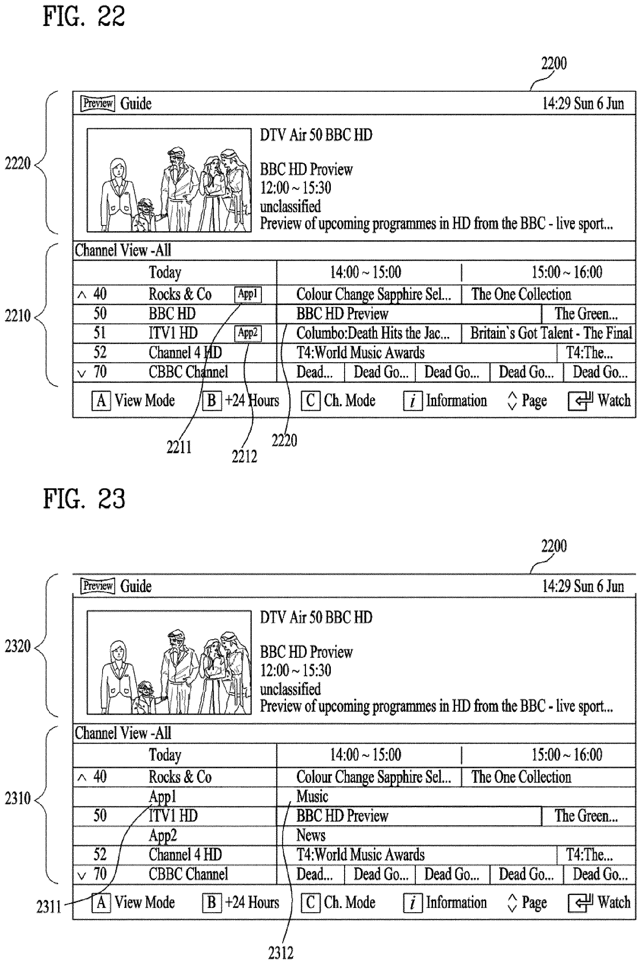

FIG. 22 illustrates yet another exemplary method for providing a list of applications in a multimedia device according to an exemplary embodiment of the present invention.

When a command requesting for a program guide is detected, the controller 1430 outputs a program guide 2200 including program information to the display unit 1420. The program guide 2200 includes a first section 2210 configured to include information on programs are that currently being broadcasted and information on programs that are to be broadcasted (*i.e.,* upcoming programs) with respect to each channel. Depending upon the exemplary embodiment, in case a command requesting for a program guide is detected while the user is viewing a specific channel, in addition to the first section 2210, the program guide 2200 may further include a second section 2220 configured to include detailed information on a program that is currently being broadcasted in the specific channel. The second section 2220 may include detailed information on a program, which is marked by high-lighted indication 2220 in the first section 2210.

Based upon the extracted information on the application, which is extracted by the auto channel tuning process, the controller 1430 may display menu icons 2211 and 2212 of applications respective to each channel in the first section 2210, in correspondence with each of the channels providing data broadcasting. For example, in case an application (Application 1), which is related to data broadcasting being provided through Rocks & Co Channel No.40, exists, a menu icon 2211 being related to Application 1 may be displayed in the program guide 2200 in correspondence with Rocks & Co Channel No.40.

By selecting any one of the menu icons 2211 and 2212 of the applications respective to each channel by using the remote controlling devices 610, 620, and 630, the user may use the corresponding application.

FIG. 23 illustrates yet another exemplary method for providing a list of applications in a multimedia device according to an exemplary embodiment of the present invention. In relation to FIG. 22, overlapping description of the features that have already been described above will not be provided for simplicity. And, therefore, the difference between the example of FIG. 22 and the example of FIG. 23 will hereinafter be mostly described in detail.

When a command requesting for a program guide is detected, the controller 1430 outputs a program guide 2300 including program information to the display unit 1420. The program guide 2300 includes a first section 2310 configured to include information on programs are that currently being broadcasted and information on programs that are to be broadcasted with respect to each channel. Depending upon the exemplary embodiment, in case a command requesting for a program guide is detected while the user is viewing a specific channel, in addition to the first section 2310, the program guide 2300 may further include a second section 2320 configured to include detailed information on a program that is currently being broadcasted in the specific channel. The second section 2320 may include detailed information on a program, which is marked by high-lighted indication 2320 in the first section 2310.

Based upon the extracted information on the application, which is extracted by the auto channel tuning process, the controller 1430 may output the list of applications related to data broadcasting and the channel list by including the lists in the first section 2210. The difference between this exemplary embodiment and the exemplary embodiment described above with reference to FIG. 22 is that the application list and the channel list are both outputted at equivalent viewpoints in the program guide 2300.

Depending upon the exemplary embodiments, the controller 1430 may also output information on the application related to data broadcasting so as to be adjacent to the information on the channels respective to each application. For example, in case an application (Application 1) related to data broadcasting, which is provided through Rocks & Co Channel No.40, exists, the controller 1430 may display information on Application 1 2311 and 2312 directly below the information on Rocks & Co Channel No.40 in the program guide 2200. For example, the information on Application 1 2311 and 2312 may include at least one of name information 2311 of Application 1 and content information 2312 of Application 1.

According to this exemplary embodiment, by viewing (or considering) the applications being related to data broadcasting as independent applications instead of subordinating the applications to each channel, information of the applications may be provided to the user regardless of each of the respective channels.

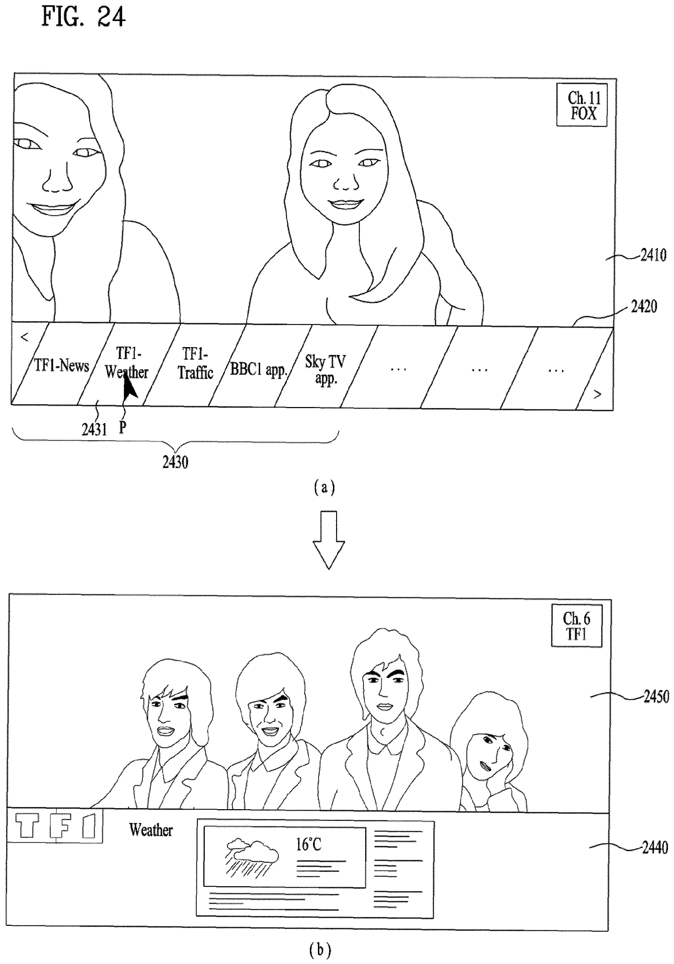

Hereinafter, an exemplary case when the user intends to execute a specific application being included in the application list will be described in detail with reference to FIG. 24 to FIG. 27.

FIG. 24 illustrates an exemplary method for executing a specific application, which is included in the list of applications, in a multimedia device according to an exemplary embodiment of the present invention.

Referring to (a) of FIG. 24, the controller 1430 controls the receiving unit 1410 so that the receiving unit 1410 can receiver broadcast signal respective to a specific channel (*e.g.,* FOX Channel No.11), and, then, the controller 1430 outputs video data 2410 included in the received broadcast signal to the display unit 1420. Thereafter, in case a specific menu being displayed on the display screen of the display unit 1420 is selected by pressing on a specific button, which is provided on the remote controlling devices 610, 620, and 630, or by using the remote controlling devices 610, 620, and 630, the controller 1430 may output a launcher bar 2420 on the display unit 1420. The launcher bar 2420 may be positioned to overlay the video data 2410. The launcher bar 2420 includes an application list 2430 listing applications related to data broadcasting.

The user may select any one of the application included in the application list 2430 by using a pointer P, which corresponds to the movements of the remote controlling devices 610, 620, and 630. In this exemplary embodiment, it will be assumed that the user selects a section 2431 corresponding to a weather application of channel TF1, among the applications included in the application list 2430, by using the pointer P.

Referring to (b) of FIG. 24, in case a weather application of channel TF1 is selected, the controller 1430 tunes to channel TF1 and controls the receiving unit 1410, so that the receiving unit 1410 can receive a broadcast signal being transmitted through channel TF1. Thereafter, the controller 1430 extracts information on an application related to channel TF1, by parsing an AIT from the signaling information included in the received broadcast signal respective to channel TF1. The controller 1430 executes the selected weather application of channel TF1 based upon the extracted information on the selected application, and, then, the controller 1430 outputs the respective execution screen 2440 on the display unit 1420. Depending upon the exemplary embodiment, the execution screen 2440 of the weather application of channel TF1 may also be outputted to one (or a same) display screen along with video data 2450 included in the received broadcast signal respective to channel TF1.

The controller 1430 may execute the weather application of channel TF1 based upon information on the weather application of channel TF1, which is pre-stored in the memory 1450, and the controller 1430 may also execute the weather application based upon the extracted information on the application related to channel TF1. For example, a data file respective to the weather application of channel TF1 may be received through the network based upon the information on the weather application of channel TF1.

Depending upon the exemplary embodiments, among the extracted information on the application related to channel TF1, the controller 1430 may compare the information on the weather application of channel TF1 with the pre-stored information on the weather application of channel TF1, which is pre-stored in the memory 1450, and may determine a difference between the two types of information. For example, in case the information on the weather application of channel TF1 is stored in the memory 1450 and a version of the corresponding application is updated afterwards, among the extracted information on the application related to channel TF1, version information of the weather application and application version information being included in the pre-stored information on the weather application of channel TF1, which is pre-stored in the memory 1450, may be different from one another. In this case, the controller 1430 may execute the weather application of channel TF1 based upon the information on the weather application of channel TF1, which is included in the extracted information on the application related to channel TF1, and, then, the controller 1430 may update the pre-stored information on the weather application of channel TF1, which is pre-stored in the memory 1450, based upon the extracted information on the application being related to channel TF1.

Depending upon the exemplary embodiment, in case the execution of the weather application of channel TF1 is bound to channel TF1, when the user shifts (or changes) the channel from channel TF1 to another channel, the execution screen 2440 may be removed from the display screen of the display unit 1420. More specifically, the execution of the weather application of channel TF1 may be terminated (or ended).

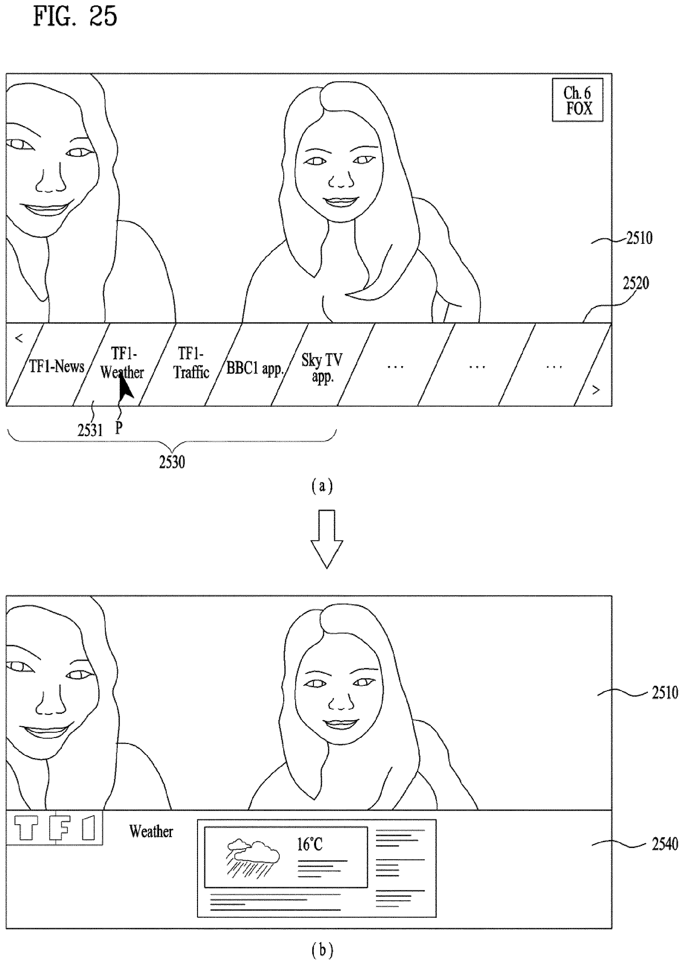

FIG. 25 illustrates another exemplary method for executing a specific application, which is included in the list of applications, in a multimedia device according to an exemplary embodiment of the present invention.

Referring to (a) of FIG. 25, the controller 1430 controls the receiving unit 1410 so that the receiving unit 1410 can receiver broadcast signal respective to a specific channel (e.g., FOX Channel No.11), and, then, the controller 1430 outputs video data 2510 included in the received broadcast signal to the display unit 1420. Thereafter, in case a specific menu being displayed on the display screen of the display unit 1420 is selected by pressing on a specific button, which is provided on the remote controlling devices 610, 620, and 630, or by using the remote controlling devices 610, 620, and 630, the controller 1430 may output a launcher bar 2520 on the display unit 1420. The launcher bar 2520 may be positioned to overlay the video data 2510. The launcher bar 2520 includes an application list 2530 listing applications related to data broadcasting.

The user may select any one of the application included in the application list 2530 by using a pointer P, which corresponds to the movements of the remote controlling devices 610, 620, and 630. In this exemplary embodiment, it will be assumed that the user selects a section 2531 corresponding to a weather application of channel TF1, among the applications included in the application list 2530, by using the pointer P.

Referring to (b) of FIG. 25, in case a weather application of channel TF1 is selected, the controller 1430 executes the weather application of channel TF1 based upon the information on the weather application of channel TF1, among the information on the applications related to channel TF1, which are stored in the memory 1450, and, then, the controller 1430 outputs the respective execution screen 2540 on the display unit 1420. Depending upon the exemplary embodiment, the execution screen 2540 of the weather application of channel TF1 may also be outputted to one (or a same) display screen along with the video data 2510. For example, a data file respective to the weather application of channel TF1 may be received through the network based upon the information on the weather application of channel TF1.

In this exemplary embodiment, unlike the description provided above in relation to FIG. 24, the channel is not changed (or shifted) from channel TF1. For example, in case the execution of the weather application of channel TF1 is not bound to channel TF1, the weather application of channel TF1 may be executed without having to perform channel shift (or channel change) to channel TF1. And, in case, the weather application of channel TF1 is set up by the user so as to be independently executed even though the execution of the weather application of channel TF1 is bound to channel TF1, the weather application of channel TF1 may also be executed without having to perform channel shift (or channel change) to channel TF1.

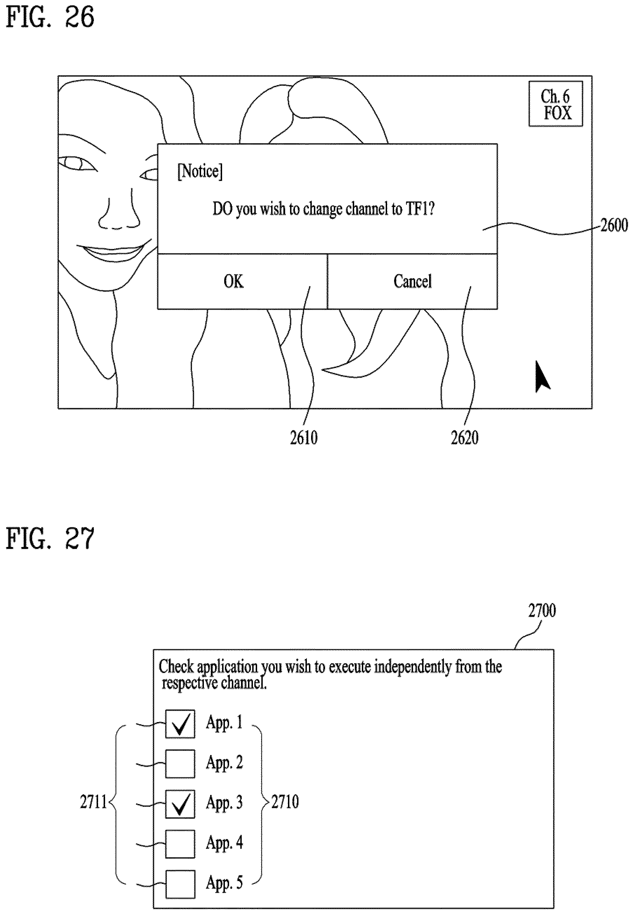

FIG. 26 illustrates an exemplary message, which may be outputted to a display unit, in case of executing a specific application related to data broadcasting in a multimedia device according to an exemplary embodiment of the present invention. For example, a message shown in FIG. 26 may be outputted in-between process (a) and process (b) of FIG. 24.

In case the channel to which the receiving unit 1410 is currently tuned corresponds to channel FOX, and in case the user selects the weather application of channel TF1, the controller 1430 may display a message 2600 inquiring the user whether or not he (or she) wishes to change the channel to channel TF1 on the display unit 1420. Since the execution of the weather application of channel TF1 is bound to channel TF1, in order to execute the weather application of channel TF1, the message 2600 may be outputted when the channel is required to be changed to channel TF1.

When the user selects an OK menu 2610 on the message 2600, as shown in (b) of FIG. 24, the controller 1430 may change the channel to channel TF1 and may then execute the weather application of channel TF1. If the user selects a Cancel menu 2610 on the message 2600, the controller 1430 does not execute the weather application of channel TF1, and, in some cases, the controller 1430 may also output a message indicating that the weather application of channel TF1 cannot be executed. Depending upon the exemplary embodiments, a menu, which is configured to change settings so that the weather application of channel TF1 can be executed independently from channel TF1, may be included in the message 2600.

FIG. 27 illustrates an exemplary method for editing configurations, so that the user can use a data broadcasting service independently from its respective channel in a multimedia device according to an exemplary embodiment of the present invention.

When a menu for changing settings of an application related to data broadcasting is selected, the controller 1430 may display a screen 2700, which is configured to allow settings of each application to be edited, on the display unit 1420. Accordingly, the user may select whether or not to execute the application of the data broadcasting independently from its related channel through the screen 2700.

The screen 2700 includes a list 2710 of applications related to data broadcasting, which are determined by the auto channel tuning process. Depending upon the exemplary embodiments, among the applications related to data broadcasting being determined by the auto channel tuning process, the screen 2700 may also include a list 2710 of applications, wherein the execution of the applications are bound to a respective channel, or application being bound to a specific program or a specific content, which is transmitted through the respective channel.

Thereafter, by checking a box 2711 corresponding to the application, which the user intends to execute independently from the respective channel, and by selecting an OK menu, the user may execute the applications having its box 2711 checked independently from its related channel.

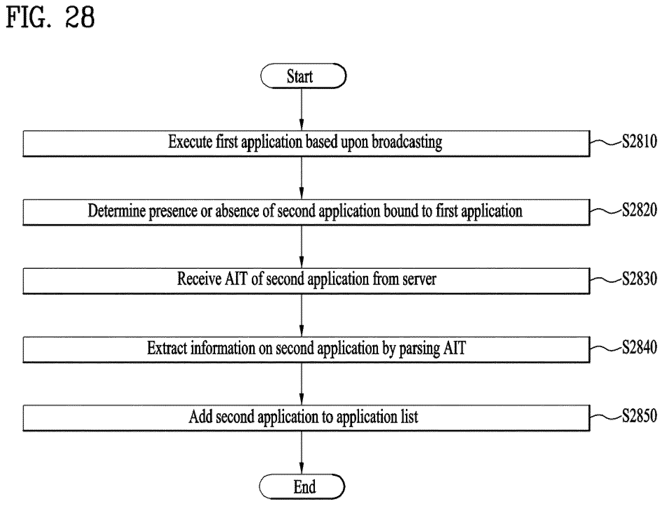

Meanwhile, among the applications related to data broadcasting, there may also exist some applications, which are provided based upon a network and separately from broadcasting stations. In case of such applications, since the AIT is not carried over the broadcast signal, information on the corresponding applications cannot be acquired via auto channel tuning. Hereinafter, a method for adding applications, which are being provided based upon the network and separately from the broadcasting stations, to the application list listing applications related to data broadcasting will be described in detail with reference to FIG. 28.

FIG. 28 illustrates a flow chart showing an exemplary method for adding an application that is being provided based upon a network in the list of applications in a multimedia device according to an exemplary embodiment of the present invention.

In this exemplary embodiment, an application being provided based upon a network refers to an application that is being provided separately from a broadcasting station based upon a network, and, in other words, this refers to an application that does not have the information on the corresponding application included in its broadcast signal. Such application is exposed to the user as a lower layer application of an application, which is generally serviced by a broadcasting station. More specifically, by executing a first application being serviced by a broadcasting station, the user may access a second application, which corresponds to a lower layer application of the first application. Such second application corresponds to an application that is provided separately from a broadcasting station based upon a network. And, in this specification, the second application may be expressed as being bound to the first application.

The controller 1430 of the multimedia device executes the first application, which is based upon broadcasting (S2810). The first application corresponds to the applications, which are described above with reference to FIG. 14 to FIG. 27, and information on the first application are included in the signaling information within the broadcast signal respective to each channel in the form of AIT. When a command for executing the first application is detected, the controller 1430 may extract information on the first application by parsing the AIT that is included in the signaling information within the broadcast signal respective to the channel, which is related to the first application. And, then, the controller 1430 may execute the first application based upon the extracted information on the first application. The extracted information on the first application may correspond to information that is pre-stored in the memory 1450.

The controller 1430 determines the presence or absence of a second application, which is bound to the first application (S2820). Herein, the controller 1430 may determine the presence or absence of link information that can access the second application from the extracted information on the first application, or by using the extracted information on the first application.

In case a second application being bound to the first application exists, the controller 1430 controls the receiving unit 1410 so that the receiving unit 1410 can receive an AIT of the second application from the respective server through the network based upon the link information (S2830). Herein, the AIT of the second application may be configured of an XML format.

The controller 1430 extracts information on the second application by parsing the received AIT (S2840). Herein, the information on the second application may include at least one of information on a name of the application, information on an attribute of the application, information on a version of the application, information on a type of the application, information on a position (or location) of a data file of the application, and information on channel-bounding of the application.

Based upon the extracted information on the second application, in case the second application is not included in the application list, which is stored in the memory 1450, the controller 1430 adds the second application to the application list (S2850). Thereafter, the controller 1430 stores the extracted information on the second application in the memory 1450. As described above with reference to FIG. 17 to FIG. 22, when outputting the application list, the second application may also be outputted by being included in the application list. Additionally, the term "application related to a channel" may be used to include a first application as well as a second application.

As described above, since the AIT of such second application cannot be acquired by the auto channel tuning process, when an application being related to an AIT that is acquired by the auto channel tuning process is executed, information on the second application that is bound to the executed application may be acquired, and, accordingly, the second application may also be added to the application list.

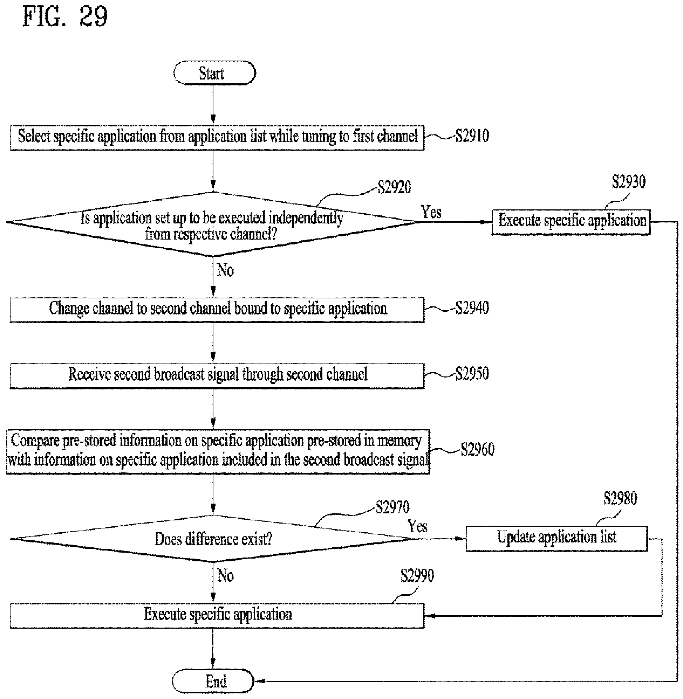

FIG. 29 illustrates a flow chart showing an exemplary method for updating the list of applications in a multimedia device according to an exemplary embodiment of the present invention.

While the receiving unit 1410 is tuning to a first channel, the controller 1430 of the multimedia device detects a command for selecting a specific application among the applications included in the application list (S2910).

The controller 1430 determines whether or not the selected specific application is set-up to be executed independently from a second channel to which the specific application is bound (S2920).

In case the specific application is set-up to be executed independently from a second channel to which the specific application is bound (S2920, Yes), the controller 1430 executes the specific application based upon the information on the specific application, which is stored in the memory 1450, and outputs its respective execution screen to the display unit 1420 (S2930).

In case the specific application is not set-up to be executed independently from a second channel to which the specific application is bound (S2920, No), the controller 1430 changes the channel to the second channel to which the specific application is bound (S2940).

Thereafter, the controller 1430 controls the receiving unit 1410 so that the receiving unit 1410 can receive a second broadcast signal respective to the second channel (S2950).

The controller 1430 compares pre-stored information on the specific application, which is pre-stored in the memory 1450, with the information on the specific application, which is extracted from the signaling information included in the second broadcast signal (S2960).

In case there is a difference between the pre-stored information on the specific application being pre-stored in the memory 1450 and the extracted information on the specific application (S2970, Yes), the controller 1430 updates the pre-stored information on the specific application being pre-stored in the memory 1450 based upon the extracted information on the specific application (S2980).

Thereafter, the controller 1430 executes the specific application (S2990). Herein, the controller 1430 may execute the specific application based upon the extracted information on the specific application.

Meanwhile, in case there is no difference between the pre-stored information on the specific application being pre-stored in the memory 1450 and the extracted information on the specific application (S2970, No), the controller 1430 the controller 1430 executes the specific application based upon the pre-stored information on the specific application being pre-stored in the memory 1450 or the extracted information on the specific application (S2990).

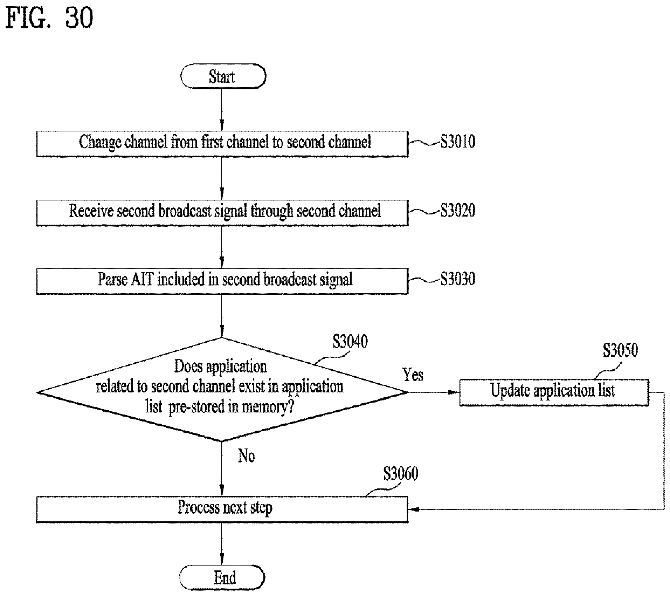

FIG. 30 illustrates a flow chart showing an exemplary method for updating the list of applications in a multimedia device according to an exemplary embodiment of the present invention.

The controller 1430 of the multimedia device detects a command for changing channels from a first channel to a second channel (S3010).

In accordance with the detected command, the controller 1430 controls the receiving unit 1410, so that the receiving unit can receive a second broadcast signal respective to the second channel (S3020).

Thereafter, the controller 1430 extracts information on an application that is bound to the second channel by parsing an AIT of signaling information included in the second broadcast signal (S3030).

Based upon the extracted information of the application, the controller 1430 determines whether or not the application exists in an application list, which is pre-stored in the memory 1450 (S3040).

Then, in case the application does not exist in the application list, which is pre-stored in the memory 1450 (S3040, No), the controller 1430 adds the corresponding application to the application list (S3050).

Meanwhile, the application exists in the application list, which is pre-stored in the memory 1450 (S3040, Yes), the controller 1430 processes the next step in accordance with the detected command (S3060). For example, when a command for executing the application is detected, the controller 1430 may execute the application based upon the extracted information on the application.

Similarly, after adding the application to the application list, the controller 1430 processes the next step in accordance with the detected command (S3060).

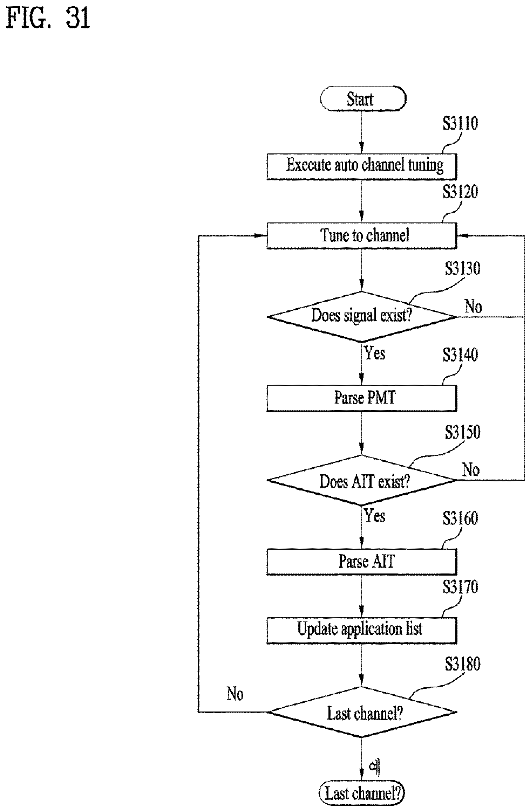

FIG. 31 illustrates a flow chart showing an exemplary method for generating a list of application being related to data broadcasting in a multimedia device according to an exemplary embodiment of the present invention.

The controller 1430 of the multimedia device executes (or performs) auto channel tuning in accordance with a command for executing auto channel tuning (S3110).

The controller 1430 controls the receiving unit 1410 so that the receiving unit 1410 can tune to a specific channel (S3120). The receiving unit 1410 may tune to a specific frequency, which is set-up as a starting frequency (or initiating frequency).

Then, the controller 1430 determines whether or not a broadcast signal being transmitted through the tuned channel exists (S3130).

In case a broadcast signal that is being transmitted through the tuned channel does not exist (S3130, No), the controller 1430 controls the receiving unit 1410 so that the receiving unit 1410 can tune to a next (or following) channel (S3120). Herein, the receiving unit 1410 may increase the frequency.

In case a broadcast signal that is being transmitted through the tuned channel exists (S3130, Yes), the controller 1430 receives the broadcast signal being transmitted through the tuned channel and parses a PMT of the signaling information included in the received broadcast signal (S3140).

The controller 1430 verifies the presence or absence of an AIT from the information, which is acquired by parsing the PMT (S3150).

In case the AIT of the signaling information included in the received broadcast signal does not exist (S3150, No), the controller 1430 controls the receiving unit 1410 so that the receiving unit 1410 can tune to a next (or following) channel (S3120).

Meanwhile, in case the AIT of the signaling information included in the received broadcast signal exists (S3150, Yes), the controller 1430 acquired information on the application that is related to the tuned channel by parsing the AIT included in the signaling information (S3160).

Thereafter, the controller 1430 updates the application list based upon the acquired information on the application (S3170). In case a pre-stored application list does not exist in the memory 1450, the controller 1430 may create (or generate) an application list based upon the acquired information on the application. And, in case a pre-stored application list exists in the memory 1450, the controller 1430 may update the application list based upon the acquired information on the application.

In case the channel (or frequency) to which the receiving unit 1410 is currently tuned corresponds to a last channel (or last frequency), the controller 1430 ends (or terminates) the auto channel tuning process (S3180, Yes), and, in case the channel (or frequency) to which the receiving unit 1410 is currently tuned does not correspond to a last channel (or last frequency) (S3180, No), the controller 1430 controls the receiving unit 1410 so that the receiving unit 1410 can tune to a next (or following) channel (S3120).

As described above, the multimedia device and the method for controlling the same have the following advantages.

According to any one of the above-described exemplary embodiments of the present invention, a multimedia device and a method for controlling the same that allow the user to verify whether the presence or absence of an application being serviced by a corresponding channel and to verify contents of the corresponding application, even if the user does not perform channel change, may be provided.

According to any one of the above-described exemplary embodiments, a multimedia device and a method for controlling the same that allow the user to use an application independently from its bound channel in accordance with the user's selection, even if the corresponding application is bound to a respective channel, may be provided.

According to any one of the above-described exemplary embodiments, a user interface that provides a variety of application lists each listing applications related to data broadcasting may be provided.

It will be apparent that additional scope of the present invention that can be applied herein will be clarified by the detailed description provided above. However, since various modifications and variations that are made without departing from the scope of the present invention can be understood by anyone skilled in the art, and, therefore, the detailed description and specific embodiments, such as preferred embodiments, of the present invention provided herein should be understood merely as examples.

As described above, the present invention may be implemented in a storage medium as processor-readable code, which can be read by a computer. A medium that can be read by the computer includes all types of recording devices having data, which can be read by a computer system, stored therein. Examples of the computer-readable storage medium may include a Hard Disk Drive (HDD), a Solid State Disk (SSD), a Silicon Disk Drive (SDD), a ROM, a RAM, a CD-ROM, an electro-magnetic tape, a floppy disk, an optical data storage device, and so on. Additionally, the computer-readable storage medium may also include storage media that can be realized in the form of carrier waves (e.g., transmission via the Internet). Furthermore, the computer may also include the controller 1430 of the device.

It will be apparent to those skilled in the art that various modifications and variations can be made in the present invention without departing from the scope of the inventions. Thus, it is intended that the present invention covers the modifications and variations of this invention provided they come within the scope of the appended claims.

## Claims

1. A multimedia device (300, 400), comprising:
a receiving unit (310, 405, 1410) configured to receive a broadcast signal;
a display unit (351, 480, 1420); and
a controller (380, 470, 1430),
wherein the controller (380, 470, 1430) is configured:
to control the receiving unit (310, 405, 1410) to receive a broadcast signal through each channel available for tuning by serially tuning each channel in the receiving unit (310, 405, 1410) when a first command for executing auto channel tuning is detected,
to verify a presence or absence of a first Application Information Table, AIT, in signaling information included in the received broadcast signal of each channel,
to, when a second command for executing a first application is detected, extract information on the first application related to a specific channel from the first AIT, when the first AIT exists in signaling information included in a broadcast signal of the specific channel,
to execute the first application based on the extracted information,
to determine a presence or absence of a link information of a second application based on the executed application, wherein the second application is provided separately from a broadcasting station based upon a network and corresponds to a lower layer application of the first application,
to control the receiving unit (310, 405, 1410) to receive a second Application Information Table, AIT, of the second application based on the link information from a respective server through a network, and
to store the extracted information on the first application corresponding to the first and second AIT in a memory (360, 440, 1450).

2. The multimedia device (300, 400) of claim 1, wherein the channel tuning is performed during channel scan process of the multimedia device (300, 400).

3. The multimedia device (300, 400) of any one of claims 1 or 2, wherein the first command is received from a remote controller (610, 620, 630).

4. The multimedia device (300, 400) of any one of claims 1 to 3, wherein the controller (380, 470, 1430) is configured:
to create an application list including applications corresponding to the first and second AIT, and
to output the created application list to the display unit (351, 480, 1420).

5. The multimedia device (300, 400) of claim 4, wherein the application list includes channel information related to each application.

6. The multimedia device (300, 400) of claim 4, wherein the controller (380, 470, 1430) is configured:
to control the display unit (351, 480, 1420) to display an execution screen of the first application.

7. The multimedia device (300, 400) of claim 6, wherein the first application is executed regardless of whether the receiving unit (310, 405, 1410) is tuned to a channel related to the first application.

8. The multimedia device (300, 400) of claim 6, wherein the controller (380, 470, 1430) is configured to control the receiving unit (310, 405, 1410) to tune to a first channel related to the first application, when the second command is detected, and to control the receiving unit (310, 405, 1410) to receive a first broadcast signal through the tuned first channel.

9. The multimedia device (300, 400) of claim 4, wherein the controller (380, 470, 1430) is configured:
to detect a third command for changing channels to a second channel,
to control the receiving unit (310, 405, 1410) to tune to the second channel in accordance with the third command, and to control the receiving unit (310, 405, 1410) to receive a second broadcast signal through the tuned second channel,
to verify a presence or absence of an AIT in signaling information included in the received second broadcast signal,
to extract information on an application related to the second channel by parsing the AIT, in case the AIT exists in the signaling information included in the second broadcast signal, and
to add the application related to the second channel to the application list, in case the application related to the second channel is not included in the application list based upon the extracted information on the application related to the second channel.

10. The multimedia device (300, 400) of any one of claims 1 to 9, wherein, when the auto channel tuning is being performed, the controller (380, 470, 1430) is configured to decode Network Information Table, NIT, Program Association Table, PAT, Program Map Table, PMT, Service Description Table, SDT, and Application Information Table, AIT from the signaling information included in the received broadcast signal of each channel.

11. The multimedia device (300, 400) of claim 6, wherein the controller (380, 470, 1430) is configured:
to control the receiving unit (310, 405, 1410) to receive the second AIT respective to the second application from a server based upon access information for accessing information on the second application, in case the second application being bound to the first application exists,
to extract information on the second application by parsing the received second AIT, and
to add the second application to the application list based upon the extracted information on the second application.

12. The multimedia device (300, 400) of any one of claims 1 to 11, wherein the controller (380, 470, 1430) is configured:
to detect a fourth command for requesting for a channel list, and
to output the channel list on the display unit (351, 480, 1420) in accordance with the fourth command, and
wherein, in case a channel related to an application exists among the channels included in the channel list, the displayed channel list includes information on applications related to each channel.

13. The multimedia device (300, 400) of claim 7, wherein the controller (380, 470, 1430) is configured to detect a fifth command for selecting an application that is to be executed regardless of a tuning to a channel among the applications included in the displayed application list.

14. The multimedia device (300, 400) of claim 8, wherein the controller (380, 470, 1430) is configured to display a message inquiring whether or not to change channels to the first channel, in case the channel to which the receiving unit (310, 405, 1410) is currently tuned does not correspond to the first channel, when the second command is detected.

15. A method for controlling a multimedia device (300, 400), comprising:
detecting (S1510) a first command for executing auto channel tuning;
receiving (S1520) a broadcast signal through each channel available for tuning by serially tuning each channel in a receiving unit (310, 405, 1410);
verifying (S1530) a presence or absence of a first Application Information Table, AIT, in signaling information included in the received broadcast signal of each channel;
when a second command for executing a first application is detected, extracting (S1540) information on the first application related to a specific channel from the first AIT, when the first AIT exists in signaling information included in a broadcast signal of the specific channel;
executing (S2810) the first application based on the extracted information;
determining (S2820) a presence or absence of a link information of a second application based on the executed application, wherein the second application is provided separately from a broadcasting station based upon a network and corresponds to a lower layer application of the first application,;
receiving (S2830) a second Application Information Table, AIT, of the second application based on the link information from a respective server through a network; and
storing (S1550, S2850) the extracted information on the first application corresponding to the first and second AIT in a memory (360, 440, 1450).

## Patentansprüche

1. Multimediavorrichtung (300, 400), die aufweist:
eine Empfangseinheit (310, 405, 1410), die konfiguriert ist, um ein Rundfunksignal zu empfangen;
eine Anzeigeeinheit (351, 480, 1420); und
eine Steuerung (380, 470,1430),
wobei die Steuerung (380, 470, 1430) konfiguriert ist, um:
die Empfangseinheit (310, 405, 1410) zu steuern, um durch jeden Kanal, der für die Abstimmung verfügbar ist, durch serielles Abstimmen jedes Kanals in der Empfangseinheit (310, 405, 1410) ein Rundfunksignal zu empfangen, wenn ein erster Befehl zum Ausführen einer automatischen Kanalabstimmung erfasst wird,
ein Vorhandensein oder Nichtvorhandensein einer ersten Anwendungsinformationstabelle, AIT, in Signalisierungsinformationen, die in dem empfangenen Rundfunksignal jedes Kanals enthalten sind, zu überprüfen,
wenn ein zweiter Befehl zur Ausführung einer ersten Anwendung erfasst wird, Informationen über die erste Anwendung in Bezug auf einen spezifischen Kanal aus der ersten AIT zu extrahieren, wenn die erste AIT in Signalisierungsinformationen vorhanden ist, die in einem Rundfunksignal des spezifischen Kanals enthalten sind,
die erste Anwendung basierend auf den extrahierten Informationen auszuführen,
ein Vorhandensein oder Nichtvorhandensein einer Verbindungsinformation einer zweiten Anwendung basierend auf der ausgeführten Anwendung zu bestimmen, wobei die zweite Anwendung basierend auf einem Netzwerk getrennt von einer Rundfunkstation bereitgestellt wird und einer Anwendung einer unteren Schicht der ersten Anwendung entspricht,
die Empfangseinheit (310, 405, 1410) zu steuern, um basierend auf den Verbindungsinformationen von einem jeweiligen Server durch ein Netzwerk eine zweite Anwendungsinformationstabelle, AIT, der zweiten Anwendung zu empfangen, und
die extrahierten Informationen über die erste Anwendung entsprechend der ersten und zweiten AIT in einem Speicher (360, 440, 1450) zu speichern.

2. Multimediavorrichtung (300, 400) nach Anspruch 1, wobei die Kanalabstimmung während des Kanalabtastvorgangs der Multimediavorrichtung (300, 400) durchgeführt wird.

3. Multimediavorrichtung (300, 400) nach einem der Ansprüche 1 oder 2, wobei der erste Befehl von einer Fernsteuerung (610, 620, 630) empfangen wird.

4. Multimediavorrichtung (300, 400) nach einem der Ansprüche 1 bis 3, wobei die Steuerung (380, 470, 1430) konfiguriert ist, um
eine Anwendungsliste zu erzeugen, die Anwendungen enthält, die der ersten und zweiten AIT entsprechen, und
die erzeugte Anwendungsliste an die Anzeigeeinheit (351, 480, 1420) auszugeben.

5. Multimediavorrichtung (300, 400) nach Anspruch 4, wobei die Anwendungsliste Kanalinformationen in Bezug auf jede Anmeldung umfasst.

6. Multimediavorrichtung (300, 400) nach Anspruch 4, wobei die Steuerung (380, 470, 1430) konfiguriert ist, um:
die Anzeigeeinheit (351, 480, 1420) zu steuern, um einen Ausführungsbildschirm der ersten Anwendung anzuzeigen.

7. Multimediavorrichtung (300, 400) nach Anspruch 6, wobei die erste Anwendung ungeachtet dessen, ob die Empfangseinheit (310, 405, 1410) auf einen Kanal in Bezug auf die erste Anwendung abgestimmt ist oder nicht, ausgeführt wird.

8. Multimediavorrichtung (300, 400) nach Anspruch 6, wobei die Steuerung (380, 470, 1430) konfiguriert ist, um die Empfangseinheit (310, 405, 1410) zu steuern, um einen ersten Kanal in Bezug auf die erste Anwendung abzustimmen, wenn der zweite Befehl erfasst wird, und um die Empfangseinheit (310, 405, 1410) zu steuern, um durch den abgestimmten ersten Kanal ein erstes Rundfunksignal zu empfangen.

9. Multimediavorrichtung (300, 400) nach Anspruch 4, wobei die Steuerung (380, 470, 1430) konfiguriert ist, um:
einen dritten Befehl zum Wechseln von Kanälen auf einen zweiten Kanal zu erfassen,
die Empfangseinheit (310, 405, 1410) zu steuern, um gemäß dem dritten Befehl auf den zweiten Kanal abzustimmen und um die Empfangseinheit (310, 405, 1410) zu steuern, um durch den abgestimmten zweiten Kanal ein zweites Rundfunksignal zu empfangen,
ein Vorhandensein oder Nichtvorhandensein eines AIT in Signalisierungsinformationen, die in dem empfangenen zweiten Rundfunksignal enthalten sind, zu überprüfen,
Informationen über eine Anwendung in Bezug auf den zweiten Kanal durch Analysieren der AIT zu extrahieren, falls die AIT in den in dem zweiten Rundfunksignal enthaltenen Signalisierungsinformationen vorhanden ist, und
die Anwendung in Bezug auf den zweiten Kanal basierend auf den extrahierten Informationen über die Anwendung in Bezug auf den zweiten Kanal zu der Anwendungsliste hinzuzufügen, falls die Anwendung in Bezug auf den zweiten Kanal nicht in der Anwendungsliste enthalten ist.

10. Multimediavorrichtung (300, 400) nach einem der Ansprüche 1 bis 9, wobei, wenn die automatische Kanalabstimmung durchgeführt wird, die Steuerung (380, 470, 1430) konfiguriert ist, um die Netzwerkinformationstabelle, NIT, die Programmzugehörigkeitstabelle, PAT, die Programmabbildungstabelle, PMT, die Dienstbeschreibungstabelle, SDT, und die Anwendungsinformationstabelle AIT aus den in dem empfangenen Rundfunksignal jedes Kanals enthaltenen Signalisierungsinformationen zu decodieren.

11. Multimediavorrichtung (300, 400) nach Anspruch 6, wobei die Steuerung (380, 470, 1430) konfiguriert ist, um:
die Empfangseinheit (310, 405, 1410) zu steuern, um basierend auf Zugriffsinformationen zum Zugreifen auf Informationen über die zweite Anwendung die zweite AIT in Bezug auf die zweite Anwendung von einem Server zu empfangen, falls die zweite Anwendung, die an die erste Anwendung gebunden ist, vorhanden ist.
Informationen über die zweite Anwendung zu extrahieren, indem die empfangene zweite AIT analysiert wird, und
die zweite Anwendung basierend auf den extrahierten Informationen über die zweite Anwendung zu der Anwendungsliste hinzuzufügen.

12. Multimediavorrichtung (300, 400) nach einem der Ansprüche 1 bis 11, wobei die Steuerung (380, 470, 1430) konfiguriert ist, um:
einen vierten Befehl zum Anfordern einer Kanalliste zu erfassen, und
die Kanalliste auf der Anzeigeeinheit (351, 480, 1420) gemäß dem vierten Befehl auszugeben, und
wobei die angezeigte Kanalliste in dem Fall, dass unter den in der Kanalliste enthaltenen Kanälen ein Kanal in Bezug auf eine Anwendung vorhanden ist, Informationen über Anwendungen in Bezug auf jeden Kanal enthält.

13. Multimediavorrichtung (300, 400) nach Anspruch 7, wobei die Steuerung (380, 470, 1430) konfiguriert ist, um ungeachtet einer Abstimmung auf einen Kanal einen fünften Befehl zum Auswählen einer Anwendung, die ausgeführt werden soll, aus den in der angezeigten Anwendungsliste enthaltenen Anwendungen zu erfassen.

14. Multimediavorrichtung (300, 400) nach Anspruch 8, wobei die Steuerung (380, 470, 1430) konfiguriert ist, um eine Nachricht anzuzeigen, die abfragt, ob Kanäle auf den ersten Kanal gewechselt werden sollen oder nicht, falls der Kanal, auf den die Empfangseinheit (310, 405, 1410) gerade abgestimmt ist, nicht dem ersten Kanal entspricht, wenn der zweite Befehl erfasst wird.

15. Verfahren zum Steuern einer Multimediavorrichtung (300, 400), das aufweist:
Erfassen (S1510) eines ersten Befehls zum Ausführen einer automatischen Kanalabstimmung;
Empfangen (S1520) eines Rundfunksignals, durch jeden für die Abstimmung verfügbaren Kanal durch serielles Abstimmen jedes Kanals in einer Empfangseinheit (310, 405, 1410),
Überprüfen (S1530) eines Vorhandenseins oder Nichtvorhandenseins einer ersten Anwendungsinformationstabelle, AIT, in Signalisierungsinformationen, die in dem empfangenen Rundfunksignal jedes Kanals enthalten sind;
wenn ein zweiter Befehl zur Ausführung einer ersten Anwendung erfasst wird, Extrahieren (S1540) von Informationen über die erste Anwendung in Bezug auf einen spezifischen Kanal aus der ersten AIT, wenn die erste AIT in Signalisierungsinformationen vorhanden ist, die in einem Rundfunksignal des spezifischen Kanals enthalten sind,
Ausführen (S2810) der ersten Anwendung basierend auf den extrahierten Informationen;
Bestimmen (S2820) eines Vorhandenseins oder Nichtvorhandenseins einer Verbindungsinformation einer zweiten Anwendung basierend auf der ausgeführten Anwendung, wobei die zweite Anwendung basierend auf einem Netzwerk getrennt von einer Rundfunkstation bereitgestellt wird und einer Anwendung einer unteren Schicht der ersten Anwendung entspricht;
Empfangen (S2830) einer zweiten Anwendungsinformationstabelle, AIT, basierend auf den Verbindungsinformationen von einem jeweiligen Server durch ein Netzwerk; und
Speichern (S1550, S2850) der extrahierten Informationen über die erste Anwendung entsprechend der ersten und zweiten AIT in einem Speicher (360, 440, 1450).

## Revendications

1. Dispositif multimédia (300, 400) comprenant :
une unité de réception (310, 405, 1410) configurée pour recevoir un signal de diffusion ;
une unité d'affichage (351, 480, 1420) ; et
une unité de commande (380, 470, 1430),
dans lequel l'unité de commande (380, 470, 1430) est configurée :
pour commander l'unité de réception (310, 405, 1410) pour recevoir un signal de diffusion par le biais de chaque canal disponible pour une syntonisation en syntonisant en série chaque canal dans l'unité de réception (310, 405, 1410) quand un premier ordre pour exécuter une syntonisation de canal automatique est détecté,
pour vérifier une présence ou absence d'une première table d'informations d'application, AIT, dans des informations de signalisation incluses dans le signal de diffusion reçu de chaque canal,
pour, quand un deuxième ordre pour exécuter une première application est détecté, extraire des informations sur la première application relative à un canal spécifique à partir de la première AIT, quand la première AIT existe dans des informations de signalisation incluses dans un signal de diffusion du canal spécifique,
pour exécuter la première application sur la base des informations extraites,
pour déterminer une présence ou absence d'une information de liaison d'une deuxième application sur la base de l'application exécutée, dans lequel la deuxième application est fournie séparément d'une station de diffusion sur la base d'un réseau et correspond à une application de couche inférieure de la première application,
pour commander l'unité de réception (310, 405, 1410) pour recevoir une deuxième table d'informations d'application, AIT, de la deuxième application sur la base de l'information de liaison à partir d'un serveur respectif par le biais d'un réseau, et
pour stocker les informations extraites sur la première application correspondant aux première et deuxième AIT dans une mémoire (360, 440, 1450).

2. Dispositif multimédia (300, 400) selon la revendication 1, dans lequel la syntonisation de canal est effectuée durant un processus de balayage de canal du dispositif multimédia (300, 400).

3. Dispositif multimédia (300, 400) selon l'une quelconque des revendications 1 ou 2, dans lequel le premier ordre est reçu à partir d'une unité de commande à distance (610, 620, 630).

4. Dispositif multimédia (300, 400) selon l'une quelconque des revendications 1 à 3, dans lequel l'unité de commande (380, 470, 1430) est configurée :
pour créer une liste d'applications incluant des applications correspondant aux première et deuxième AIT, et
pour délivrer en sortie la liste d'applications créée à l'unité d'affichage (351, 480, 1420).

5. Dispositif multimédia (300, 400) selon la revendication 4, dans lequel la liste d'applications inclut des informations de canal relatives à chaque application.

6. Dispositif multimédia (300, 400) selon la revendication 4, dans lequel l'unité de commande (380, 470, 1430) est configurée :
pour commander l'unité d'affichage (351, 480, 1420) pour afficher un écran d'exécution de la première application.

7. Dispositif multimédia (300, 400) selon la revendication 6, dans lequel la première application est exécutée que l'unité de réception (310, 405, 1410) soit syntonisée sur un canal relatif à la première application ou non.

8. Dispositif multimédia (300, 400) selon la revendication 6, dans lequel l'unité de commande (380, 470, 1430) est configurée pour commander l'unité de réception (310, 405, 1410) pour se syntoniser sur un premier canal relatif à la première application, quand le deuxième ordre est détecté, et pour commander l'unité de réception (310, 405, 1410) pour recevoir un premier signal de diffusion par le biais du premier canal syntonisé.

9. Dispositif multimédia (300, 400) selon la revendication 4, dans lequel l'unité de commande (380, 470, 1430) est configurée :
pour détecter un troisième ordre pour changer des canaux vers un deuxième canal, pour commander l'unité de réception (310, 405, 1410) pour se syntoniser sur le deuxième canal conformément au troisième ordre et pour commander l'unité de réception (310, 405, 1410) pour recevoir un deuxième signal de diffusion par le biais du deuxième canal syntonisé,
pour vérifier une présence ou absence d'une AIT dans des informations de signalisation incluses dans le deuxième signal de diffusion reçu,
pour extraire des informations sur une application relative au deuxième canal en décryptant l'AIT, dans un cas où l'AIT existe dans les informations de signalisation incluses dans le deuxième signal de diffusion, et
pour ajouter l'application relative au deuxième canal à la liste d'applications, dans le cas où l'application relative au deuxième canal n'est pas incluse dans la liste d'applications sur la base des informations extraites sur l'application relative au deuxième canal.

10. Dispositif multimédia (300, 400) selon l'une quelconque des revendications 1 à 9, dans lequel, quand la syntonisation de canal automatique est en cours d'exécution, l'unité de commande (380, 470, 1430) est configurée pour décoder une table d'informations de réseau, NIT, une table d'association de programmes, PAT, une table de carte de programmes, PMT, une table de description de service, SDT, et une table d'informations d'application, AIT, à partir des informations de signalisation incluses dans le signal de diffusion reçu de chaque canal.

11. Dispositif multimédia (300, 400) selon la revendication 6, dans lequel l'unité de commande (380, 470, 1430) est configurée :
pour commander l'unité de réception (310, 405, 1410) pour recevoir la deuxième AIT par rapport à la deuxième application à partir d'un serveur sur la base d'informations d'accès pour accéder à des informations sur la deuxième application, dans le cas où la deuxième application qui est liée à la première application existe,
pour extraire des informations sur la deuxième application en décryptant la deuxième AIT reçue, et
pour ajouter la deuxième application à la liste d'applications sur la base des informations extraites sur la deuxième application.

12. Dispositif multimédia (300, 400) selon l'une quelconque des revendications 1 à 11, dans lequel l'unité de commande (380, 470, 1430) est configurée :
pour détecter un quatrième ordre pour demander une liste de canaux, et
pour délivrer en sortie la liste de canaux sur l'unité d'affichage (351, 480, 1420) conformément au quatrième ordre, et
dans lequel, dans le cas où un canal relatif à une application existe parmi les canaux inclus dans la liste de canaux, la liste de canaux affichée inclut des informations sur des applications relatives à chaque canal.

13. Dispositif multimédia (300, 400) selon la revendication 7, dans lequel l'unité de commande (380, 470, 1430) est configurée pour détecter un cinquième ordre pour sélectionner une application qui doit être exécutée indépendamment d'une syntonisation sur un canal parmi les applications incluses dans la liste d'applications affichée.

14. Dispositif multimédia (300, 400) selon la revendication 8, dans lequel l'unité de commande (380, 470, 1430) est configurée pour afficher un message interrogeant sur le fait de changer ou non des canaux vers le premier canal, dans le cas où le canal sur lequel l'unité de réception (310, 405, 1410) est actuellement syntonisée ne correspond pas au premier canal, quand le deuxième ordre est détecté.

15. Procédé de commande d'un dispositif multimédia (300, 400), comprenant :
la détection (S1510) d'un premier ordre pour exécuter une syntonisation de canal automatique ;
la réception (S1520) d'un signal de diffusion par le biais de chaque canal disponible pour une syntonisation en syntonisant en série chaque canal dans une unité de réception (310, 405, 1410) ;
la vérification (S1530) d'une présence ou absence d'une première table d'informations d'application, AIT, dans des informations de signalisation incluses dans le signal de diffusion reçu de chaque canal ;
quand un deuxième ordre pour exécuter une première application est détecté, l'extraction (S1540) d'informations sur la première application relative à un canal spécifique à partir de la première AIT, quand la première AIT existe dans des informations de signalisation incluses dans un signal de diffusion du canal spécifique ;
l'exécution (S2810) de la première application sur la base des informations extraites ;
la détermination (S2820) d'une présence ou absence d'une information de liaison d'une deuxième application sur la base de l'application exécutée, dans lequel la deuxième application est fournie séparément d'une station de diffusion sur la base d'un réseau et correspond à une application de couche inférieure de la première application ;
la réception (S2830) d'une deuxième table d'informations d'application, AIT, de la deuxième application sur la base de l'information de liaison à partir d'un serveur respectif par le biais d'un réseau ; et
le stockage (S1550, S2850) des informations extraites sur la première application correspondant aux première et deuxième AIT dans une mémoire (360, 440, 1450).
